# EUROPÄISCHE PATENTSCHRIFT

(11) **EP 1 559 756 B1**
(45) Veröffentlichungstag und Bekanntmachung des Hinweises auf die Patenterteilung: **06.02.2008**
(21) Anmeldenummer: 04405051.6
(22) Anmeldetag: 28.01.2004
(51) Int. Cl.: C09D 11/00, C09B 43/16

(54) **Tintensatz für den Tintenstrahldruck**
Ink set for ink jet printing
Assortiment d'encres déstiné à l'impression par jet d'encre

(43) Veröffentlichungstag der Anmeldung: 03.08.2005
(73) Patentinhaber: ILFORD Imaging Switzerland GmbH, 1723 Marly 1 (CH)
(72) Erfinder: Kriebel, Arnd, 1723 Marly (CH); Gremaud, Jean-Luc, 1726 Farvagny (CH)

(56) Entgegenhaltungen:
- EP-A- 0 755 984
- EP-A- 1 308 490
- US-A- 6 053 969

## Beschreibung

### Technisches Gebiet

Die vorliegende Erfindung bezieht sich auf Tintensätze auf wässriger Basis im Tintenstrahldruck, die in den Gelbtinten Mischungen von grünstichigen und rotstichigen Gelbfarbstoffen enthalten.

### Stand der Technik

Das Tintenstrahldruckverfahren hat bereits auf vielen Gebieten klassische Bildwiedergabeverfahren wie die Fotografie auf Silberhalogenidmaterialien, den Offsetdruck sowie den Siebdruck abgelöst oder ergänzt. Es findet Anwendung im Bürobereich, im Fotobereich, im grafischen Bereich, vor allem im Proofing, allgemein, bei der Herstellung von gefärbten Textilien oder in der Industrie. In diesem Verfahren werden kleinste Tintentröpfchen unter Verwendung digital gespeicherter Bildinformationen durch die Düsen eines Druckkopfes auf die zu bedruckende Unterlage aufgebracht. Die dabei verwendeten Tinten bestehen aus Lösungen von farbigen oder schwarzen Farbstoffen oder aus Dispersionen farbiger oder schwarzer Pigmente in einem flüssigen Dispersionsmittel. Die Lösungs- oder Dispergiermittel bestehen je nach verwendetem Farbstoff- oder Pigmenttyp aus Wasser, aus Mischungen von Wasser mit wasserlöslichen organischen Lösungsmitteln, aus Mischungen ausschliesslich organischer Lösungsmittel, aus Ölen oder hydrophoben organischen Lösungsmitteln.
Das Tintenstrahldruckverfahren hat einen beachtlichen Reifegrad erreicht, aber für hochwertige Anwendungen im grafischen Bereich und im Fotobereich sind weitere Verbesserungen nötig. In diesen Bereichen spielen die Lichtbeständigkeit und ein grosses Volumen des Farbraums (Gamut) eine entscheidende Rolle. Beide Eigenschaften werden von der Natur der verwendeten Farbstoffe oder Pigmente entscheidend beeinflusst. Pigmente besitzen im allgemeinen eine bessere Lichtbeständigkeit als lösliche Farbstoffe. Dagegen haben im allgemeinen Farbstoffe ein höhere Brillanz, d. h. leuchtendere Farben. Pigmente haben zudem die Tendenz, auf der Oberfläche der bedruckten Unterlage zu bleiben und dadurch den Glanz der Oberfläche zu vermindern. Das ist vor allem bei fotografischen Anwendungen des Tintenstrahldrucks unerwünscht.
Bei Verwendung von Farbstofftinten bestehen bisher eindeutig bessere Möglichkeiten zur Wiedergabe brillanter Farben. Für Anwendungen, die eine hohe Farbbrillanz erfordern, werden deshalb vorzugsweise Tinten verwendet, die Farbstoffe an Stelle von Pigmenten enthalten. Im allgemeinen besteht bei Verwendung von farbstoffhaltigen Tinten auch ein Kostenvorteil, da Farbstoffe meistens billiger als Pigmente sind.
In Tintensätzen für anspruchsvolle Anwendungen wie in der Grafik, im Fotobereich oder im Proofing werden deshalb möglichst brillante Farbstoffe verwendet, die neben einer guten Wasserbeständigkeit und einer hohen Diffusionsfestigkeit eine möglichst hohe Lichtbeständigkeit aufweisen müssen.
Der einfachste Tintensatz besteht aus einer Gelbtinte, einer Purpurtinte, einer Blaugrüntinte und einer Schwarztinte. Mit diesen drei farbigen Tinten (Primärfarben) können durch Überlagerung auch die sekundären Farben wie Rot, Blau und Grün und alle Zwischenfarbtöne erzeugt werden.
Tinten für den Tintenstrahldruck müssen hohen Anforderungen genügen. Sie müssen ausgezeichnete Eigenschaften bezüglich chemischer und physikalischer Stabilität, Toxizität und Rheologie aufweisen. Im Druckkopf dürfen sie die Druckkopfmaterialien nicht angreifen, sie dürfen die Düsenöffnungen nicht verstopfen und keine Ablagerungen auf den Heizelementen thermischer Druckköpfe bilden. Auf dem Aufzeichnungsmaterial müssen die Tinten jedoch schnell trocknen, die Farbstoffe dürfen beispielsweise nicht diffundieren, sie müssen lichtbeständig sein, sie dürfen bei Lagerung des hergestellten Bildes in verunreinigter Luft nicht ausbleichen oder sich verfärben, sie dürfen den Glanz des Aufzeichnungsmaterials nicht vermindern und sie dürfen die Laminierung solcher bedruckter Aufzeichnungsmaterialien nicht stören. Durch diese hohen Anforderungen wird die Auswahl geeigneter Farbstoffe für den qualitativ hochstehenden Tintenstrahldruck stark eingeschränkt. Nur sehr wenige aller bekannten Farbstoffe erfüllen diese Anforderungen des qualitativ hochstehenden Tintenstrahldrucks einigermassen. Es gibt wahrscheinlich keinen einzigen Farbstoff, der alle Anforderungen vollständig erfüllt.

Rotstichige Gelbfarbstoffe, wie sie beispielsweise in der Patentanmeldung EP 0'755'984 beschrieben werden, zeigen sowohl eine ausgezeichnete Lichtbeständigkeit wie eine ausgezeichnete Brillanz und sind deshalb besonders zur perfekten Wiedergabe von Hauttönen mit fotografischer Qualität im Tintenstrahldruck geeignet. Zusätzlich sind diese Farbstoffe sehr diffusionsfest.

Für grafische Anwendungen, beispielsweise im Proofing, werden aber normalerweise nicht diese rotstichigen Gelbfarbstoffe verwendet. Säuregelb 23 mit der Formel 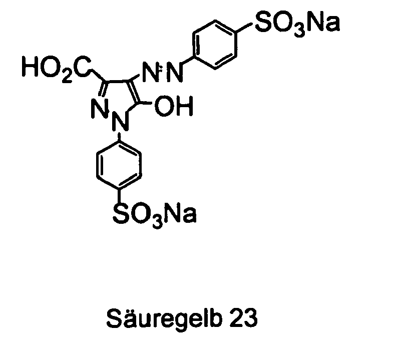 hat genau den richtigen Farbton und ist deshalb der geeignetste und meist gebrauchte Gelbfarbstoff für grafische Anwendungen, insbesondere im Proofing. Nachteile dieses Farbstoffs sind die geringe Lichtbeständigkeit und das ungünstige Diffusionsverhalten auf fast allen Aufzeichnungsmaterialien sowohl auf Polymerbasis als auch auf nanoporösen Aufzeichnungsmaterialien. Einzig auf unbeschichtetem Papier ist seine Diffusionsbeständigkeit befriedigend.

Im Patent US 6'053'969 wird ein Tintensatz für den Tintenstrahldruck beschrieben, in welchem die Gelbtinte ein Gemisch des Gelbfarbstoffs "Säuregelb 17" und des Gelbfarbstoffs der Formel (III) enthält.

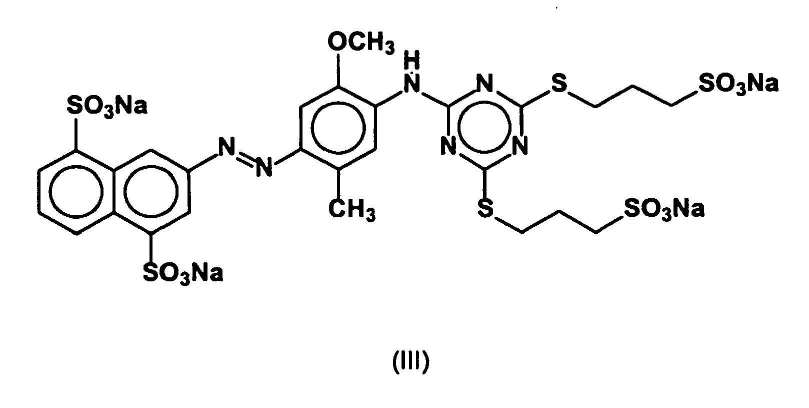

In der Patentanmeldung EP 1'308'490 wird ein Tintensatz für den Tintenstrahldruck beschrieben, in welchem die Gelbtinte ein Gemisch des Gelbfarbstoffs "Direktgelb 132" und des Gelbfarbstoffs "llford Yellow 104" enthält.

### Beschreibung der Erfindung

Ziel der Erfindung ist die Bereitstellung von Tintensätzen für grafische Anwendungen bei Verwendung von Aufzeichnungsmaterialien auf Polymerbasis oder von nanoporösen Aufzeichnungsmaterialien, in denen die Gelbtinten verbesserte Eigenschaften aufweisen. Dieses Ziel wird durch Gelbtinten erreicht, die Mischungen geeigneter grünstichiger und rotstichiger Gelbfarbstoffe enthalten.
Farben werden sehr oft durch ihre Lage im Farbraum beschrieben. Heute wird meist das (L* a* b*)-System von CIE (1976) verwendet. Eine Definition findet sich beispielsweise auf Seite 829 des Buches von G. Wyszecki und W. S. Stiles, "Color Science: Concepts and Methods, Quantitative Data and Formulae", 2. Auflage, Wiley-Interscience (1982), ISBN 0-471-02106-7. Dieses System wird in der weiteren Beschreibung der Erfindung verwendet.
Unter grünstichigen Gelbfarbstoffen werden hier Gelbfarbstoffe verstanden, deren a*-Wert der Farbkoordinaten negativer ist als derjenige des Säuregelb 23, wenn sie bei gleichem L*-Wert auf dasselbe Aufzeichnungsmaterial aufgebracht werden. Unter rotstichigen Gelbfarbstoffen werden hier Gelbfarbstoffe verstanden, deren a*-Wert der Farbkoordinaten positiver ist als derjenige des Säuregelb 23, wenn sie bei gleichem L*-Wert auf dasselbe Aufzeichnungsmaterial aufgebracht werden.
Solche Mischungen können den Farbton von Säuregelb 23 sehr gut reproduzieren. Sie zeigen aber ein stark verbessertes Diffusionsverhalten und eine um einen Faktor drei bis fünf verbesserte Lichtbeständigkeit. In den erfindungsgemässen Gelbtinten werden Gelbfarbstoffe verwendet, deren Eigenschaften bezüglich Diffusionsfestigkeit und Lichtbeständigkeit deutlich besser sind als die entsprechenden Eigenschaften des Farbstoffs Säuregelb 23.
Das Mischungsverhältnis zwischen grünstichigem Gelbfarbstoff und rotstichigem Gelbfarbstoff liegt dabei zwischen 1 : 99 und 99 : 1. Innerhalb dieses Mischungsverhältnisses können alle Farbtöne zwischen denen der beiden reinen Farbstoffe erzeugt werden. Zur Simulation des Farbtons des Säuregelb 23 wird ein "grafischer" grünstichiger Gelbfarbstoff mit einem negativeren a*-Wert der Farbkoordinaten als der des Säuregelb 23 mit einem "fotografischen" rotstichigen Gelbfarbstoff mit einem positiveren a*-Wert der Farbkoordinaten als der des Säuregelb 23 gemischt.

### Ausführliche Beschreibung der Erfindung

Die Erfindung bezieht sich auf Tintensätze zum Drucken farbiger Bilder auf kommerziell erhältlichen Tintenstrahldruckern wie Desktop-Druckern oder Weitformatdruckem. Alle Typen von Tintenstrahldruckern können verwendet werden, wie beispielsweise thermische Tintenstrahldrucker (Bubble Jet), Piezo-Drucker oder kontinuierliche Tintenstrahldrucker (Continuous Ink Jet).
Solche Tintensätze bestehen mindestens aus einer Gelbtinte, einer Purpurtinte, einer Blaugrüntinte und einer Schwarztinte. Es ist auch möglich, zusätzlich solche Tinten mit niedrigerer Farbstoffkonzentration zu verwenden. Dadurch wird eine bessere Wiedergabe von dunklen und hellen Bildstellen erreicht. Es ist auch möglich, zusätzlich Tinten mit anderer Farbe hinzuzufügen, um die Farbwiedergabe zu verbessern.

In Gelbtinten für den Tintenstrahldruck werden im allgemeinen Azofarbstoffe verwendet, welche eine gute Lichtbeständigkeit aufweisen.
Die Erfindung bezieht sich im Besonderen auf Tintensätze mit Gelbtinten, in denen eine Mischung eines grünstichigen ("grafischen") und eines rotstichigen ("fotografischen") Gelbfarbstoffs mit hoher Lichtbeständigkeit verwendet wird. Diese erfindungsgemässen Gelbtinten erlauben eine sehr gute Reproduktion des Farbtons des im Proofing verwendeten Farbstoffs Säuregelb 23 bei gleichzeitig sehr guter Lichtbeständigkeit und sehr gutem Diffusionsverhalten.

Geeignete Farbstoffe mit einem rotstichigen Farbton für die Gelbtinte der erfindungsgemässen Tintensätze werden beispielsweise in der Patentanmeldung EP 0'755'984 beschrieben. Solche Gelbtinten enthalten mindestens einen Farbstoff der allgemeinen Formel (I), 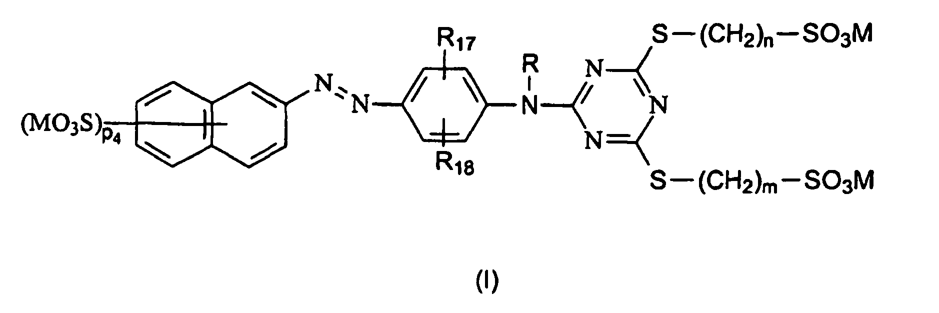 worin
- R: für Wasserstoff oder einen aliphatischen Rest mit 1 bis 6 Kohlenstoff atomen;
- M: für Wasserstoff oder ein Metallatom oder einen gegebenenfalls mit einer Alkylgruppe, einer Alkoxyalkylgruppe oder einer Hydroxyalkylgruppe substituiertes Ammonium;
- R₁₇, R₁₈: unabhängig voneinander für Wasserstoff, einen Alkylrest oder einen Alkoxylrest mit jeweils 1 bis 3 Kohlenstoffatomen stehen;
- p₄: einen Wert zwischen 1 und 3 annimmt und die Sulfogruppe in Stellung 1, 4, 5, 6, 7 oder 8 steht, wenn p₄ den Wert 1 hat; die Sulfogruppen in den Stellungen 4 und 8, 5 und 7, 6 und 8 oder 1 und 5 stehen, wenn p₄ den Wert 2 hat; oder die Sulfogruppen in den Stellungen 3, 6 und 8 oder 4, 6 und 8 stehen, wenn p₄ den Wert 3 hat
und
- n, m: unabhängig voneinander einen Wert zwischen 2 und 6 annehmen.

Besonders geeignet sind der Gelbfarbstoff "Gelb R-1" 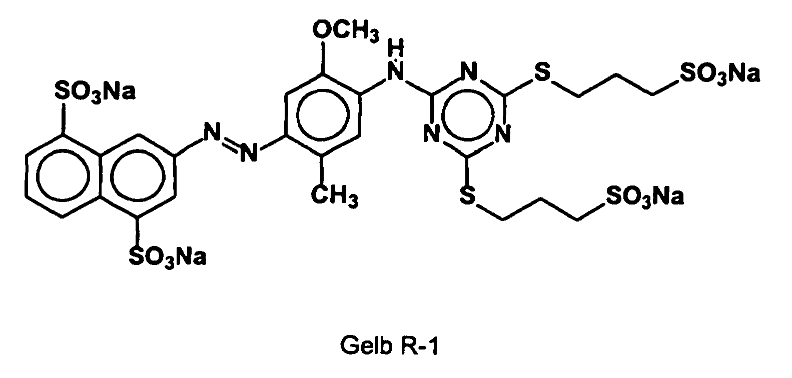 sowie der Gelbfarbstoff "Gelb R-2"

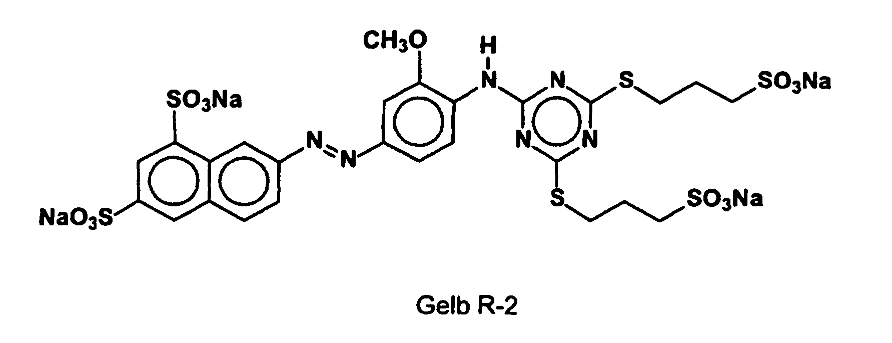

In den erfindungsgemässen Gelbtinten kann auch ein Gemisch von rotstichigen Farbstoffen der allgemeinen Formel (I) verwendet werden, insbesondere ein Gemisch der rotstichigen Gelbfarbstoffe "Gelb R-1" und "Gelb R-2".

Geeignete Farbstoffe mit einem grünstichigen Farbton für die Gelbtinte der erfindungsgemässen Tintensätze sind beispielsweise in der Patentanmeldung EP 0'755'984 beschrieben. Solche Gelbtinten enthalten mindestens einen Farbstoff der allgemeinen Formel (II), 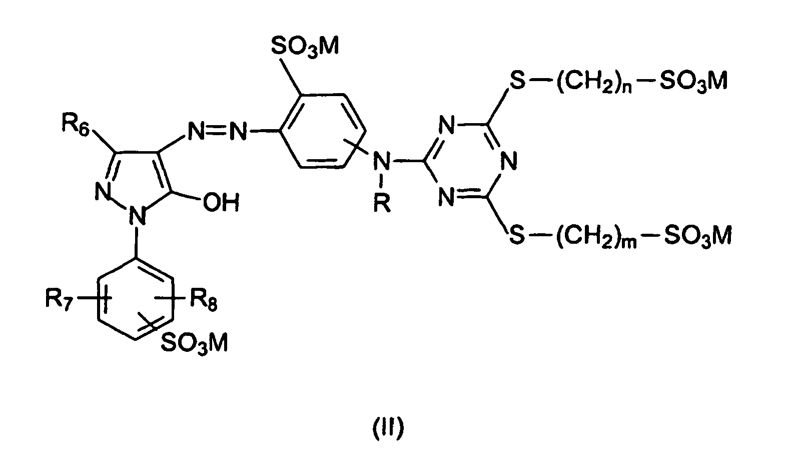 worin
- R: für Wasserstoff oder einen aliphatischen Rest mit 1 bis 6 Kohlenstoffatomen;
- M: für Wasserstoff oder ein Metallatom oder einen gegebenenfalls mit einer Alkylgruppe, einer Alkoxyalkylgruppe oder einer Hydroxyalkylgruppe substituiertes Ammonium;
- R₆: für einen Methylrest oder Carboxylrest;
- R₇, R₈: unabhängig voneinander für Wasserstoff, Chlor, Brom oder einen Methylrest stehen
und
- n, m: unabhängig voneinander einen Wert zwischen 2 und 6 annehmen.

Besonders geeignet sind der Gelbfarbstoff "Gelb G-1" der Formel 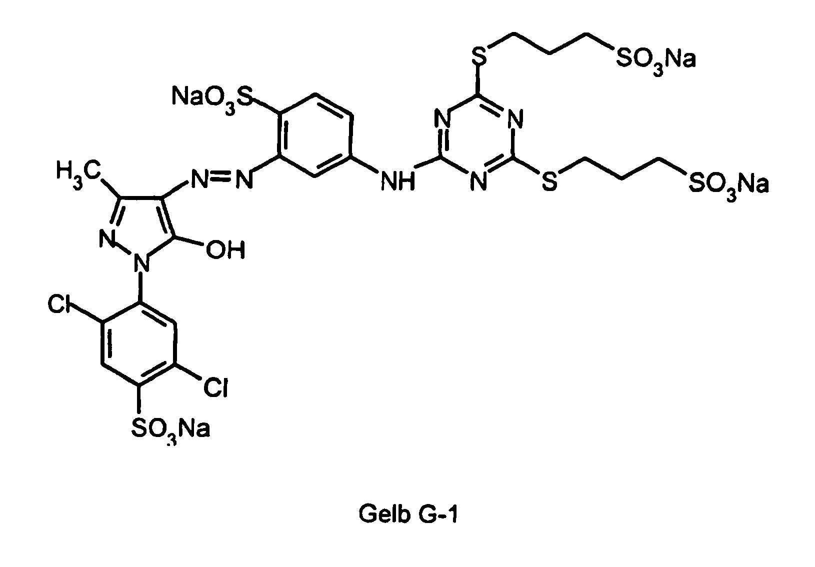 sowie der Gelbfarbstoff "Gelb G-2" der Formel

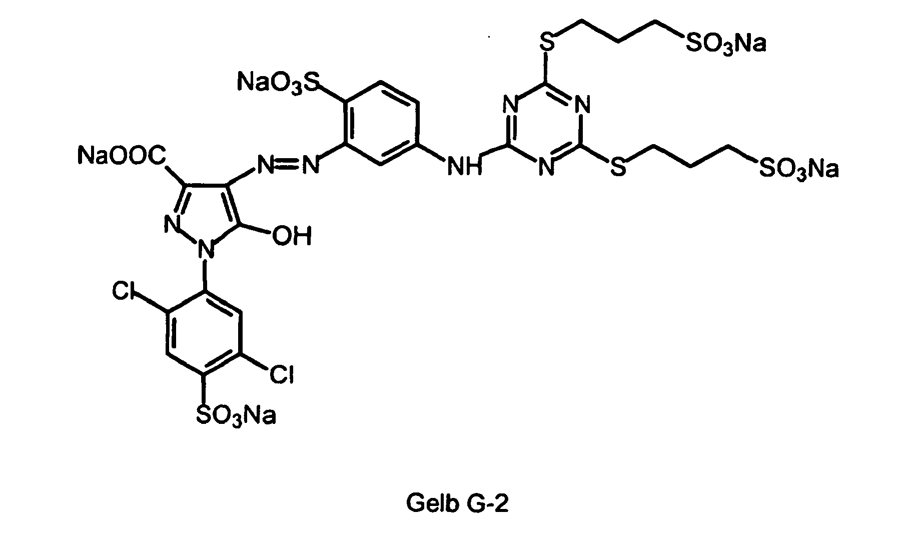

In der erfindungsgemässen Gelbtinte kann auch ein Gemisch von grünstichigen Farbstoffen der allgemeinen Formel (II) verwendet werden, insbesondere ein Gemisch der grünstichigen Gelbfarbstoffe "Gelb G-1" und "Gelb G-2".

Tintensätze, welche in der Gelbtinte eine Mischung aus mindestens je einem Vertreter der rotstichigen und der grünstichigen Gelbfarbstoffklasse enthalten, ergeben zusammen mit der Purpurtinte, der Blaugrüntinte und der Schwarztinte eine sehr hohe Farbbrillanz in den Grün-, Gelb- und Rotfarbtönen bei verbesserter Lichtbeständigkeit und ausgezeichneter Diffusionsfestigkeit im Vergleich zu einem Tintensatz, der in der Gelbtinte den Farbstoff Säuregelb 23 enthält.

In Purpurtinten für den Tintenstrahldruck werden im allgemeinen Azofarbstoffe verwendet wie beispielsweise metallfreie Azofarbstoffe mit Gammasäure oder H-Säure im Chromophor oder Kupferkomplexazofarbstoffe.

Geeignete Farbstoffe für die Purpurtinte der erfindungsgemässen Tintensätze werden beispielsweise in den Patentanmeldungen WO 96/24'636, EP 1'086'999 und EP 1'219'682 beschrieben. Besonders bevorzugte Farbstoffe sind der Farbstoff "Purpur 1" der Formel 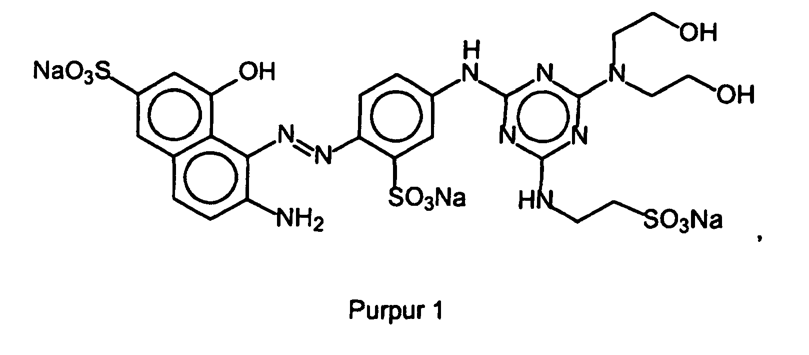 der Farbstoff "Purpur 2" der Formel 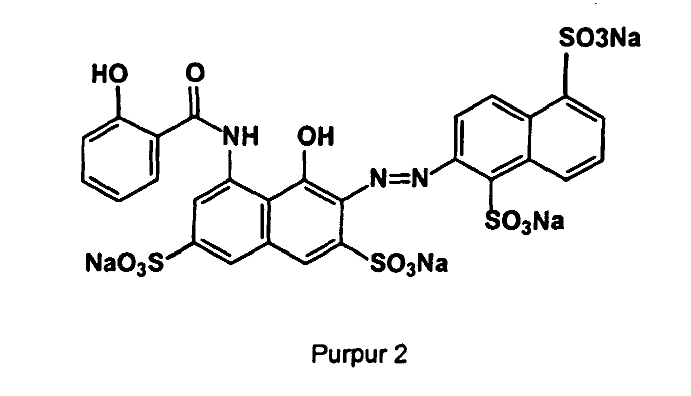 sowie der Farbstoff "Purpur 3" der Formel

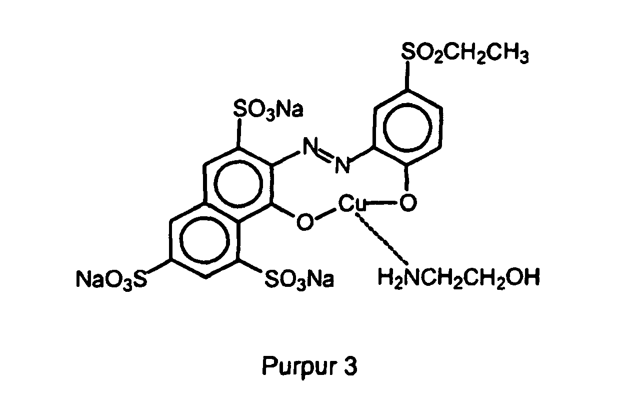

Besonders bevorzugt ist ein Tintensatz bestehend aus einer Gelbtinte, einer Purpurtinte, einer Blaugrüntinte und einer Schwarztinte, der in der Gelbtinte eine Mischung eines rotstichigen Gelbfarbstoffs der Formel (I) und eines grünstichigen Gelbfarbstoffs der Formel (II) und in der Purpurtinte einen der Farbstoffe "Purpur 1 ", "Purpur 2" oder "Purpur 3" oder ein Gemisch dieser Farbstoffe enthält.

In Blaugrüntinten für den Tintenstrahldruck werden im allgemeinen Kupferphthalocyanin-Farbstoffe eingesetzt.

Ein besonders geeigneter Farbstoff für die Blaugrüntinte der erfindungsgemässen Tintensätze ist der Farbstoff "Direktblau 199" der Formel

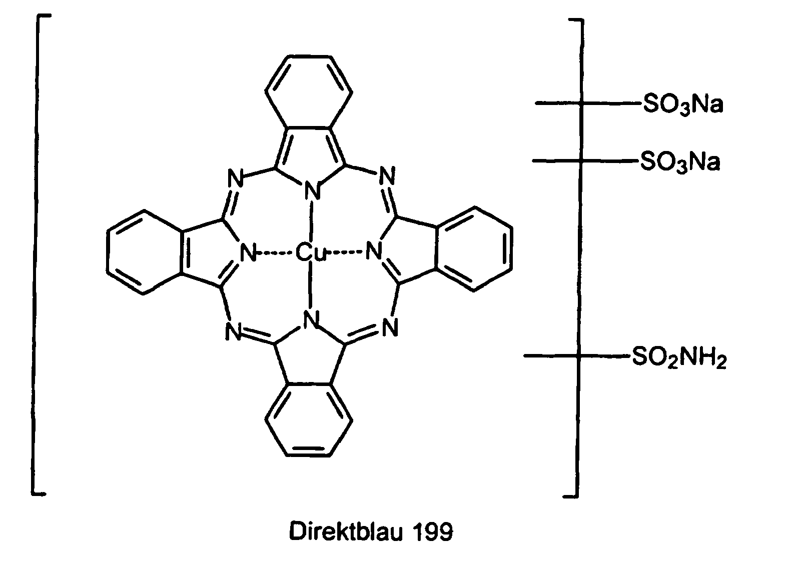

Andere substituierte Kupferphthalocyanine, mit unterschiedlicher Anzahl und Lage der Substituenten im Molekül, können ebenfalls verwendet werden.

Besonders bevorzugt ist ein Tintensatz bestehend aus einer Gelbtinte, einer Purpurtinte, einer Blaugrüntinte und einer Schwarztinte, der in der Gelbtinte eine Mischung eines rotstichigen Gelbfarbstoffs der Formel (I) und eines grünstichigen Gelbfarbstoffs der Formel (II) und in der Blaugrüntinte den Farbstoff "Direktblau 199" enthält.

Geeignete Farbstoffe für die Schwarztinte der erfindungsgemässen Tintensätze werden beispielsweise in den Patentanmeldungen EP 0'859'033, EP 0'924'263 und EP 0'982'371 sowie im Patent CH 692'580 beschrieben. Besonders bevorzugt sind der Farbstoff "Schwarz 1" der Formel 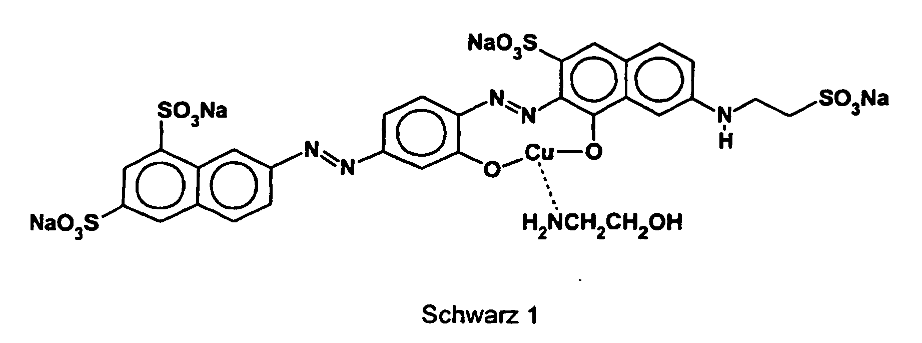 der Farbstoff "Schwarz 2" der Formel 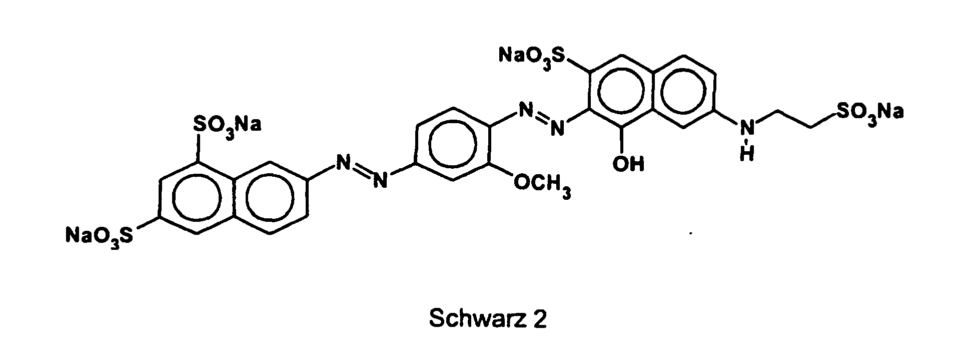 sowie der Farbstoff "Reaktivschwarz 31" der Formel

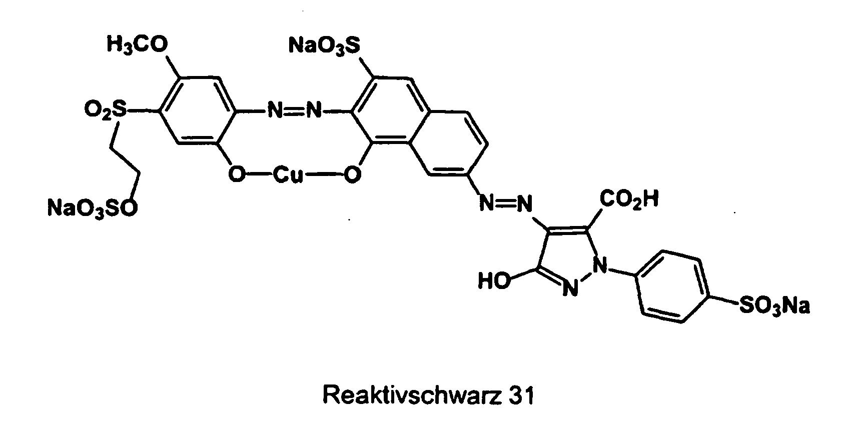

Besonders bevorzugt ist ein Tintensatz bestehend aus einer Gelbtinte, einer Purpurtinte, einer Blaugrüntinte und einer Schwarztinte, welcher in der Gelbtinte eine Mischung eines rotstichigen Gelbfarbstoffs der Formel (I) und eines grünstichigen Gelbfarbstoffs der Formel (II) und in der Schwarztinte einen der Farbstoffe "Schwarz 1", Schwarz 2", "Reaktivschwarz 31" oder ein Gemisch dieser Farbstoffe enthält.

Solche Tintensätze bestehend aus einer Gelbtinte, einer Purpurtinte, einer Blaugrüntinte und einer Schwarztinte, welche in der Gelbtinte eine Mischung aus mindestens je einem Vertreter der rotstichigen und der grünstichigen Gelbfarbstoffklasse enthalten, ergeben zusammen mit der Blaugrüntinte, der Purpurtinte und der Schwarztinte eine sehr hohe Farbbrillanz in den Grün-, Gelb- und Rotfarbtönen bei verbesserter Lichtbeständigkeit und ausgezeichneter Diffusionsfestigkeit im Vergleich zu einem analogen Tintensatz, der in der Gelbtinte den Farbstoff Säuregelb 23 enthält.

Aufzeichnungsmaterialien für den hoch qualitativen Tintenstrahldruck bestehen im allgemeinen aus einem Träger, wie beispielsweise polyethylenbeschichtetes Papier oder weissopaker Polyester, auf den auf der Vorderseite eine Tintenaufnahmeschicht und auf der Rückseite gegebenenfalls eine Rückschicht zur Verbesserung der Planlage aufgebracht worden ist.
Bei Aufzeichnungsmaterialien auf Polymerbasis besteht die Tintenaufnahmeschicht sehr oft im Wesentlichen aus einer Mischung eines Polymers wie Polyvinylpyrrolidon oder Carboxymethylcellulose oder einer Mischung solcher Polymere mit Gelatine. Bei diesen Aufzeichnungsmaterialien werden die Tinten relativ langsam in die Tintenaufnahmeschicht aufgenommen wird, da das Eindringen von der Quellung der Tintenaufnahmeschicht abhängig ist. Für Fotofinishing-Anwendungen sind diese Aufzeichnungsmaterialien daher wenig geeignet, da diese Anwendung eine schnelle Trocknung des bedruckten Aufzeichnungsmaterials erfordert.
Besser geeignet für die Fotofinishing-Anwendung sind Aufzeichnungsmaterialien mit Tintenaufnahmeschichten, die nanokristalline, nanoporöse anorganische Verbindungen enthalten. Hier wird die aufgetragene Tinte sofort durch die Wirkung der Kapillarität der nanokristallinen, nanoporösen anorganischen Verbindungen, wie beispielsweise AIOOH oder SiO₂, aufgesaugt, ohne dass ein Quellen der Tintenaufnahmeschichten notwendig wäre.

Die erfindungsgemässen Gelbtinten sowie die dazugehörigen Tintensätze ergeben sowohl auf polymerbeschichteten wie auch auf nanoporösen Aufzeichnungsmaterialien ausgezeichnete Ergebnisse.

Die erfindungsgemässen Tinten enthalten wie üblich neben dem Hauptbestandteil Wasser wasserlösliche organische Lösungsmittel. Ein solches Lösungsmittel muss mit den Farbstoffen und den anderen Bestandteilen der Tinte kompatibel sein, d. h. es darf weder Niederschläge bilden noch chemische Reaktionen eingehen. Die Lösungsmittel können allein oder als Mischungen eingesetzt werden. Bevorzugt sind jedoch Tinten, die möglichst wenig verschiedene Lösungsmittel enthalten. Diese Lösungsmittel können in Mengen bis 80 Gewichtsprozent bezogen auf die Gesamtmenge in der Tinte enthalten sein, bevorzugt sind aber möglichst kleine Mengen bis 30 Gewichtsprozent, um die Trocknung und die Farbstoffdiffusion nicht nachteilig zu beeinflussen. Mögliche Lösungsmittel sind beispielsweise wasserlösliche Alkohole, wasserlösliche Glykole, höhere Alkohole, Polyalkohole, Diglykole, Triglykole und Polyglykole sowie Monoether und Diether dieser Verbindungen sowie stickstoffhaltige Lösungsmittel wie Ethanolamin, Diethanolamin, Triethanolamin, 2-Pyrrolidon, Octylpyrrolidon, N-Methyl-pyrrolid-2-on oder 1,3-Dimethylimidazolid-2-on.
Die erfindungsgemässen Tinten enthalten weiter so genannte Feuchthalter. Feuchthalter sind organische, wasserlösliche Flüssigkeiten mit hohem Siedepunkt. Sie verhindern, dass die Tinte an den Düsen der Druckköpfe auch während ausgedehnter Druckpausen eintrocknet. Praktisch alle hochsiedenden Lösungsmittel des vorhergehenden Abschnitts können verwendet werden. Bevorzugt ist aber Glyzerin in Mengen bis 30 Gewichtsprozent bezogen auf die Gesamtmenge, besonders bevorzugt sind Mengen bis 15 Gewichtsprozent.
Den erfindungsgemässen Tinten können auch Metallchelatkomplexbildner zugesetzt werden. Diese Komplexbildner können in Mengen bis 0.5 Gewichtsprozent bezogen auf die Gesamtmenge in der Tinte enthalten sein, bevorzugt sind Mengen bis 0.3 Gewichtsprozent. Beispiel eines solchen Komplexbildners sind Ethylendiamintetraessigsäure und seine Salze.
Die erfindungsgemässen Tinten können weiter nichtionische und/oder anionische Netzmittel zur Einstellung der Oberflächenspannung enthalten, wenn nicht bereits durch die Anwesenheit der Lösungsmittel die Oberflächenspannung den nötigen Wert erreicht. Kationische Netzmittel können in der Regel nicht verwendet werden, weil sie mit den anionischen Farbstoffen Ausfällungen bilden. Die nichtionischen und/oder anionischen Netzmittel werden den Tinten vorteilhaft in Mengen bis 2 Gewichtsprozent zugesetzt, bevorzugt sind Mengen zwischen 0.1 Gewichtsprozent und 1.0 Gewichtsprozent.
Beispiele von nichtionischen Netzmitteln sind Surfynole (ethoxylierte Alkine), insbesondere Surfynol 465 (erhältlich bei Air Products and Chemicals, Allentown, USA); Tergitole (ethoxylierte Alkohole, erhältlich bei Dow Chemical Company, Midland, USA) und Olin 10 G (erhältlich bei Olin Corporation, Norwalk, USA).
Beispiele von anionischen Netzmitteln sind Aerosol OT (erhältlich bei Cytec Industries, West Paterson, USA); Triton X-200 (erhältlich bei Dow Chemical Company, Midland, USA) und Niaproof 04 (erhältlich bei Niacet Corporation, Niagara Falls, USA).
Die erfindungsgemässen Tinten enthalten weiter Biozide in Mengen bis 0.5 Gewichtsprozent, bevorzugt in Mengen zwischen 0.1 Gewichtsprozent und 0.3 Gewichtsprozent. Diese Biozide sind unerlässlich, damit die Tinten besonders in offenen Systemen stabil gegen Bakterien-, Hefe- oder Schimmelbefall sind. Von ihnen hängt die Lebensdauer sowie die Transport- und Lagerfähigkeit einer Tinte ab. Beispiele solcher Biozide sind Mergal 10 K N, erhältlich bei Troy Chemical Company, Florham Park, USA, und Proxel GXL, erhältlich bei Avecia, Manchester, Grossbritannien.

Die Gelbtinte, die Purpurtinte, die Blaugrüntinte und die Schwarztinte der erfindungsgemässen Tintensätze enthalten die Farbstoffe insgesamt je in einer Menge zwischen 0.1 Gewichtsprozent und 10 Gewichtsprozent bezogen auf das Gesamtgewicht jeder Tinte, bevorzugt je in einer Menge zwischen 2 Gewichtsprozent und 6 Gewichtsprozent bezogen auf das Gesamtgewicht jeder Tinte.

Die verwendeten Komponenten der erfindungsgemässen Gelbtinten (ausser Wasser und Farbstoff) sind in Tabelle 1 aufgeführt, bezogen auf das Gesamtgewicht der Tinte.

**Tabelle 1**

| Komponente | Gewichtsprozent |
|---|---|
| Ethylenglykol | 6.0 |
| Propylenglykol | 3.0 |
| N-Methylpyrrolidon | 3.0 |
| Triethanolamin | 2.0 |
| Olin 10G (Netzmittel) | 0.1 |
| Surfynol 465 (Netzmittel) | 0.2 |
| Mergal K 10 N (Biozid) | 0.1 |

Die Zusammensetzung einer typischen Purpurtinte im erfindungsgemässen Tintensatz ist in Tabelle 2 aufgeführt.

**Tabelle 2**

| Komponente | Gewichtsprozent |
|---|---|
| Ethylenglykol | 6.0 |
| Propylenglykol | 3.0 |
| N-Methylpyrrolidon | 3.0 |
| Triethanolamin | 2.0 |
| Olin 10G (Netzmittel) | 0.1 |
| Surfynol 465 (Netzmittel) | 0.2 |
| Mergal K 10 N (Biozid) | 0.1 |
| Farbstoff "Purpur 2" | 2.5 |
| Wasser | 83.1 |

Der Farbstoff "Purpur 2" kann auch durch die Farbstoffe "Purpur 1", "Purpur 3" oder ein Gemisch dieser Purpurfarbstoffe ersetzt werden.

Die Zusammensetzung einer typischen Blaugrüntinte im erfindungsgemässen Tintensatz ist in Tabelle 3 aufgeführt.

**Tabelle 3**

| Komponente | Gewichtsprozent |
|---|---|
| Ethylenglykol | 6.0 |
| Propylenglykol | 3.0 |
| N-Methylpyrrolidon | 3.0 |
| Triethanolamin | 2.0 |
| Olin 10G (Netzmittel) | 0.1 |
| Surfynol 465 (Netzmittel) | 0.2 |
| Mergal K 10 N (Biozid) | 0.1 |
| Farbstoff "Direktblau 199" | 3.0 |
| Wasser | 82.6 |

Der Blaugrünfarbstoff Direktblau 199 kann auch durch andere geeignete Kupferphthalocyanin-Farbstoffe oder Gemische von Kupferphthalocyanin-Farbstoffen ersetzt werden.

Die Zusammensetzung einer typischen Schwarztinte im erfindungsgemässen Tintensatz ist in Tabelle 4 aufgeführt.

**Tabelle 4**

| Komponente | Gewichtsprozent |
|---|---|
| Ethylenglykol | 6.0 |
| Propylenglykol | 3.0 |
| N-Methylpyrrolidon | 3.0 |
| Olin 10G (Netzmittel) | 0.1 |
| Surfynol 465 (Netzmittel) | 0.2 |
| Mergal K 10 N (Biozid) | 0.1 |
| Farbstoff "Schwarz 1" | 4.5 |
| Wasser | 83.1 |

Der Schwarzfarbstoff "Schwarz 1" kann auch durch die Schwarzfarbstoffe "Schwarz 2", Reaktivschwarz 31 oder ein Gemisch dieser Schwarzfarbstoffe ersetzt werden.

Die vorliegende Erfindung wird durch die folgenden Beispiele näher beschrieben, ohne dass sie dadurch in irgendeiner Weise eingeschränkt würde.

### Bildherstellung

Auf die beiden Aufzeichnungsmaterialien IJP1.GP7 und DTN.GP9, beide erhältlich bei ILFORD Imaging Switzerland GmbH, Freiburg, Schweiz, wurden für die Bestimmung der Farbkoordinaten mit einem Tintenstrahldrucker Canon BJC 8500 mit den erfindungsgemässen Tinten zehnstufige Gelbfarbkeile gedruckt, wobei der Tintenauftrag von Stufe 1 (100 %) zu Stufe 10 (10 %) linear abnimmt.

IJP1.GP7 ist ein Aufzeichnungsmaterial für den Tintenstrahldruck auf Polymerbasis, DTN.GP9 ist ein nanoporöses Aufzeichnungsmaterial.
Auf die beiden Aufzeichnungsmaterialien IJP1.GP7 und DTN.GP9 wurden für die Bestimmung der Lichtbeständigkeit Gelbfelder mit 95 % Tintenauftrag gedruckt.
Auf die beiden Aufzeichnungsmaterialien IJP1.GP7 und DTN.GP9 wurden für die Bestimmung der Farbstoffdiffusion quadratische Farbfelder mit einer Fläche von 1 cm² gedruckt wurden, die ein fein abgestuftes Liniengitter aufweisen, bei dem die Quadrate eine Länge von 8 Pixeln und die Linien eine Breite von 2 Pixeln aufweisen. Die bedruckten Muster wurden 24 Stunden bei einer relativen Luftfeuchtigkeit von 59 % getrocknet. Anschliessend wurde die Farbstoffdiffusion an den bedruckten Mustern bestimmt.

### Prüfungen

Auf den mit den erfindungsgemässen Gelbtinten bedruckten Aufzeichnungsmaterialien wurden die folgenden Eigenschaften bestimmt:

### Lichtbeständigkeit

Die bedruckten Muster wurden in einem Atlas Ci35A Weather-O-Meter^{®} mit einer 6500 W Xenon-Lampe so lange bestrahlt, bis 10 kJoule/cm² erreicht waren. Der Dichteunterschied der Muster vor und nach der Bestrahlung ist ein Mass für die Lichtbeständigkeit der Farbstoffe.

### Farbkoordinaten

Die Farbkoordinaten (L*a*b*-Werte) an den bedruckten Mustern wurden mit Hilfe eines Spektrometers Spectrolino von Gretag AG, Regensdorf, Schweiz, gemessen.

### Farbstoffdiffusion

Die optische Dichte der quadratischen Farbfelder wurde mit einem Densitometer Spectrolino^{™} der Firma Gretag Macbeth, Regensdorf, Schweiz gemessen. Anschliessend wurden die bedruckten Muster während 7 Tagen in einem Klimaschrank der Marke Heräus bei einer Temperatur von 40° C und einer relativen Feuchtigkeit von 80 % gelagert. Nach abgeschlossener Lagerung wurden die Muster erneut ausgemessen. Die Dichteunterschiede in Prozenten vor und nach der Lagerung sind ein Mass für das Ausmass der Farbstoffdiffusion. Eine Dichteerhöhung entspricht einer Farbstoffdiffusion, da die unbedruckten Bereiche im Gitter durch diffundierenden Farbstoff angefärbt werden und deshalb die integral gemessene Dichte ansteigt.

### Beispiele

### Beispiel 1

Die verwendeten Nicht-Farbstoff-Komponenten dieser Gelbtinten sind in Tabelle 4 aufgeführt, bezogen auf das Gesamtgewicht der Tinte.

**Tabelle 4**

| Komponente | Gewichtsprozent |
|---|---|
| Ethylenglykol | 6.0 |
| Propylenglykol | 3.0 |
| N-Methylpyrrolidon | 3.0 |
| Triethanolamin | 2.0 |
| Olin 10G (Netzmittel) | 0.1 |
| Surfynol 465 (Netzmittel) | 0.2 |
| Mergal K 10 N (Biozid) | 0.1 |

Olin 10G ist bei Olin Corporation, Norwalk, USA erhältlich, Surfynol 465 bei Air Products and Chemicals, Allentown, USA, und Mergal K 10 N bei Troy Chemical Company, Florham Park, USA.

Das Mischungsverhältnis der verwendeten Gelbfarbstoffe ist in Tabelle 5 aufgeführt. Die Gelbtinte Y-1.1(Vergleich) enthält einzig den Gelbfarbstoff "Gelb G-1", die Gelbtinte Y-1.5 (Vergleich) enthält einzig den Gelbfarbstoff "Gelb R-1". Die Gelbtinten Y-1.2, Y-1.3 und Y-1.4 enthalten je ein Gemisch dieser beiden Farbstoffe.

**Tabelle 5**

| Tinte | Anteil "Gelb G-1" (Gewichtsprozent) | Anteil "Gelb R-1" (Gewichtsprozent) |
|---|---|---|
| Y-1.1 (Vergleich) | 100 | 0 |
| Y-1.2 | 75 | 25 |
| Y-1.3 | 50 | 50 |
| Y-1.4 | 25 | 75 |
| Y-1.5 (Vergleich) | 0 | 100 |

In der Vergleichstinte Y-C-1 wurde an Stelle des Farbstoffs "Gelb G-1" in Tinte Y-1.1 der Farbstoff Säuregelb 23 verwendet. Seine Menge wurde so angepasst, dass etwa die gleiche Dichte wie mit dem Farbstoff "Gelb G-1" erhalten wurde.

### Beispiel 2

In den Tinten von Beispiel 1 wurde der Farbstoff "Gelb R-1" durch den Farbstoff "Gelb R-2" ersetzt.
Das Mischungsverhältnis der verwendeten Gelbfarbstoffe ist in Tabelle 6 aufgeführt. Die Gelbtinte Y-2.1(Vergleich) enthält einzig den Gelbfarbstoff "Gelb G-1", die Gelbtinte Y-2.5 (Vergleich) enthält einzig den Gelbfarbstoff "Gelb R-2". Die Gelbtinten Y-2.2, Y-2.3 und Y-2.4 enthalten je ein Gemisch dieser beiden Farbstoffe.

**Tabelle 6**

| Tinte | Anteil "Gelb G-1" (Gewichtsprozent) | Anteil "Gelb R-2" (Gewichtsprozent) |
|---|---|---|
| Y-2.1 (Vergleich) | 100 | 0 |
| Y-2.2 | 75 | 25 |
| Y-2.3 | 50 | 50 |
| Y-2.4 | 25 | 75 |
| Y-2.5 (Vergleich) | 0 | 100 |

### Ergebnisse

In Tabelle 7 sind die gemessenen L*a*b*-Werte der Maximaldichten der Tinten von Beispiel 1 sowie der Vergleichstinte auf dem Aufzeichnungsmaterial IJP1.GP7 zusammengestellt.

**Tabelle 7**

| Tinte | L* | a* | b* |
|---|---|---|---|
| Y-1.1 (Vergleich) | 91.80 | -16.01 | 100.89 |
| Y-1.2 | 90.21 | -10.49 | 97.17 |
| Y-1.3 | 88.58 | -5.10 | 97.69 |
| Y-1.4 | 87.46 | -1.46 | 95.87 |
| Y-1.5 (Vergleich) | 86.66 | 1.17 | 92.89 |
| Y-C-1 | 90.89 | -9.87 | 109.31 |

In Tabelle 8 sind die gemessenen L*a* a*-Werte der Maximaldichten der Tinten von Beispiel 1 sowie der Vergleichstinte auf dem Aufzeichnungsmaterial DTN.GP9 zusammengestellt.

**Tabelle 8**

| Tinte | L* | a* | b* |
|---|---|---|---|
| Y-1.1 (Vergleich) | 91.64 | -17.84 | 98.74 |
| Y-1.2 | 90.46 | -13.84 | 95.92 |
| Y-1.3 | 89.10 | -9.52 | 95.83 |
| Y-1.4 | 88.19 | -6.53 | 93.17 |
| Y-1.5 (Vergleich) | 87.45 | -3.72 | 90.62 |
| Y-C-1 | 89.71 | -8.94 | 103.18 |

Die Ergebnisse in den Tabellen 7 und 8 zeigen, dass mit einer geeigneten Mischung der beiden Farbstoffe "Gelb G-1" und "Gelb R-1" der Farbton a* des Farbstoffs Säuregelb 23 auf beiden Aufzeichnungsmaterialien gut reproduziert werden kann.

In Tabelle 9 sind die gemessenen L*a*b*-Werte der Maximaldichten der Tinten von Beispiel 2 sowie der Vergleichstinte auf dem Aufzeichnungsmaterial IJP1.GP7 zusammengestellt.

**Tabelle 9**

| Tinte | L* | a* | b* |
|---|---|---|---|
| Y-2.1 (Vergleich) | 91.80 | -16.01 | 100.89 |
| Y-2.2 | 90.87 | -12.10 | 96.34 |
| Y-2.3 | 90.17 | -8.94 | 95.43 |
| Y-2.4 | 89.32 | -5.92 | 93.29 |
| Y-2.5 (Vergleich) | 88.33 | -2.84 | 91.99 |
| Y-C-1 | 90.89 | -9.87 | 109.31 |

In Tabelle 10 sind die gemessenen L*a*b*-Werte der Maximaldichten der Tinten von Beispiel 2 sowie der Vergleichstinte auf dem Aufzeichnungsmaterial DTN.GP9 zusammengestellt.

**Tabelle 10**

| Tinte | L* | a* | b* |
|---|---|---|---|
| Y-2.1 (Vergleich) | 91.64 | -17.84 | 98.74 |
| Y-2.2 | 91.07 | -15.16 | 94.92 |
| Y-2.3 | 90.23 | -12.35 | 93.63 |
| Y-2.4 | 89.50 | -9.61 | 91.42 |
| Y-2.5 (Vergleich) | 88.64 | -6.88 | 89.26 |
| Y-C-1 | 89.71 | -8.94 | 103.18 |

Die Ergebnisse in den Tabellen 9 und 10 zeigen, dass auch mit einer geeigneten Mischung der beiden Farbstoffe "Gelb G-1" und "Gelb R-2" der Farbton a* des Farbstoffs Säuregelb 23 auf beiden Aufzeichnungsmaterialien gut reproduziert werden kann.

In Tabelle 11 sind die Ergebnisse der Lichtbeständigkeitsprüfung der Tinten von Beispiel 1 sowie der Vergleichstinte auf den Aufzeichnungsmaterialien IJP1.GP7 und DTN.GP9 zusammengestellt.

**Tabelle 11**

| Tinte | Prozentualer Dichteverlust | |
|---|---|---|
| | Aufzeichnungsmaterial IJP1.GP7 | Aufzeichnungsmaterial DTN.GP9 |
| Y-1.1 (Vergleich) | 16 | 15 |
| Y-1.2 | 14 | 13 |
| Y-1.3 | 10 | 11 |
| Y-1.4 | 6 | 11 |
| Y-1.5 (Vergleich) | 4 | 9 |
| Y-C-1 | 53 | 39 |

Die Ergebnisse in Tabelle 11 zeigen, dass die Lichtbeständigkeit von Gelbflächen mit den beiden Farbstoffen "Gelb G-1" und "Gelb R-1" sowohl allein wie auch in ihren Mischungen wesentlich besser ist als diejenige von Gelbflächen mit dem Farbstoff Säuregelb 23, der bisher im Proofing verwendet wurde.
Ein Dichteverlust von 25 % entspricht einer Lebensdauer von 5 Jahren bei Raumbeleuchtung (500 Lux).

In Tabelle 12 sind die Ergebnisse der Lichtbeständigkeitsprüfung der Tinten von Beispiel 2 sowie der Vergleichstinte auf den Aufzeichnungsmaterialien IJP1.GP7 und DTN.GP9 zusammengestellt.

**Tabelle 12**

| Tinte | Prozentualer Dichteverlust | |
|---|---|---|
| | Aufzeichnungsmaterial IJP1.GP7 | Aufzeichnungsmaterial DTN.GP9 |
| Y-2.1 (Vergleich) | 16 | 15 |
| Y-2.2 | 15 | 12 |
| Y-2.3 | 11 | 11 |
| Y-2.4 | 7 | 10 |
| Y-2.5 (Vergleich) | 5 | 6 |
| Y-C-1 | 53 | 39 |

Die Ergebnisse in Tabelle 12 zeigen, dass die Lichtbeständigkeit von Gelbflächen mit den beiden Farbstoffen "Gelb G-1" und "Gelb R-2" sowohl allein wie auch in ihren Mischungen wesentlich besser ist als diejenige von Gelbflächen mit dem Farbstoff Säuregelb 23, der bisher im Proofing verwendet wurde.

In Tabelle 13 sind die Ergebnisse der Diffusionsprüfung der Tinten Y-1.1 (Vergleich), Y-1.5(Vergleich) und Y-2.5(Vergleich) sowie der Vergleichstinte Y-C-1 auf den Aufzeichnungsmaterialien IJP1.GP7 und DTN.GP9 zusammengestellt.

**Tabelle 13**

| Tinte | Prozentualer Dichteanstieg | |
|---|---|---|
| | Aufzeichnungsmaterial IJP1.GP7 | Aufzeichnungsmaterial DTN.GP9 |
| Y-1.1 (Vergleich) | 8 | 4 |
| Y-1.5 (Vergleich) | 6 | 5 |
| Y-2.5 (Vergleich) | 7 | 3 |
| Y-C-1 | 20 | 27 |

Die Ergebnisse in Tabelle 16 zeigen, dass die Diffusionsfestigkeit der drei Farbstoffe "Gelb R-1", "Gelb R-1" und "Gelb G-1" oder von deren Mischungen wesentlich besser ist als diejenige des Farbstoffs Säuregelb 23, der bisher als Gelbfarbstoff im Proofing verwendet wurde.

## Patentansprüche

1. Tintensatz für den Tintenstrahldruck bestehend aus mindestens einer Gelbtinte, mindestens einer Purpurtinte, mindestens einer Blaugrüntinte und mindestens einer Schwarztinte, **dadurch gekennzeichnet, dass** die Gelbtinte eine Mischung mindestens eines rotstichigen Gelbfarbstoffs der allgemeinen Formel (I), 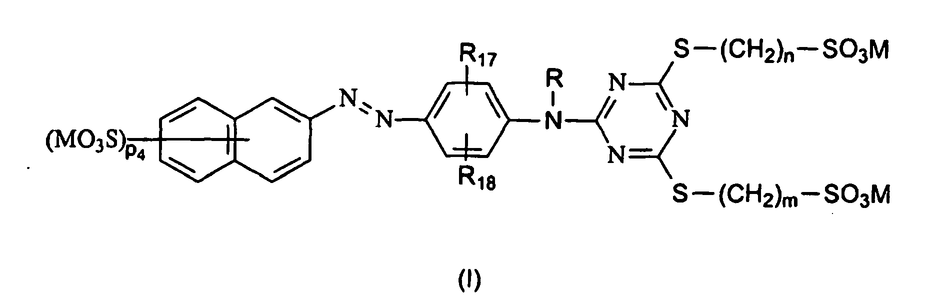 worin
R für Wasserstoff oder einen aliphatischen Rest mit 1 bis 6 Kohlenstoffatomen;
M für Wasserstoff oder ein Metallatom oder einen gegebenenfalls mit einer Alkylgruppe, einer Alkoxyalkylgruppe oder einer Hydroxyalkylgruppe substituiertes Ammonium;
R₁₇, R₁₈ unabhängig voneinander für Wasserstoff, einen Alkylrest oder einen Alkoxylrest mit jeweils 1 bis 3 Kohlenstoffatomen stehen;
p₄ einen Wert zwischen 1 und 3 annimmt und die Sulfogruppe in Stellung 1, 4, 5, 6, 7 oder 8 steht, wenn p₄ den Wert 1 hat; die Sulfogruppen in den Stellungen 4 und 8, 5 und 7, 6 und 8 oder 1 und 5 stehen, wenn p₄ den Wert 2 hat; oder die Sulfogruppen in den Stellungen 3, 6 und 8 oder 4, 6 und 8 stehen, wenn p₄ den Wert 3 hat
und
n, m unabhängig voneinander einen Wert zwischen 2 und 6 annehmen,
und
mindestens eines grünstichigen Gelbfarbstoffs der allgemeinen Formel (II), 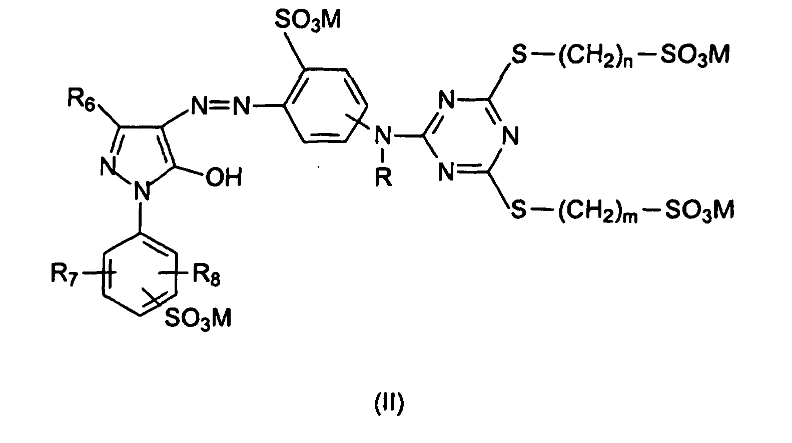 worin
R für Wasserstoff oder einen aliphatischen Rest mit 1 bis 6 Kohlenstoffatomen;
M für Wasserstoff oder ein Metallatom oder einen gegebenenfalls mit einer Alkylgruppe, einer Alkoxyalkylgruppe oder einer Hydroxyalkylgruppe substituiertes Ammonium;
R₆ für einen Methylrest oder Carboxylrest;
R₇, R₈ unabhängig voneinander für Wasserstoff, Chlor, Brom oder einen Methylrest stehen;
und
n, m unabhängig voneinander einen Wert zwischen 2 und 6 annehmen,
enthält.

2. Tintensatz gemäss Anspruch 1, **dadurch gekennzeichnet, dass** das Verhältnis der rotstichigen Gelbfarbstoffe und der grünstichigen Gelbfarbstoffe in der Gelbtinte zwischen 1 : 99 Gewichtsprozent und 99 : 1 Gewichtsprozent liegt.

3. Tintensatz gemäss den Ansprüchen 1 und 2, **dadurch gekennzeichnet, dass** als rotstichiger Gelbfarbstoff der Farbstoff "Gelb R-1" der Formel 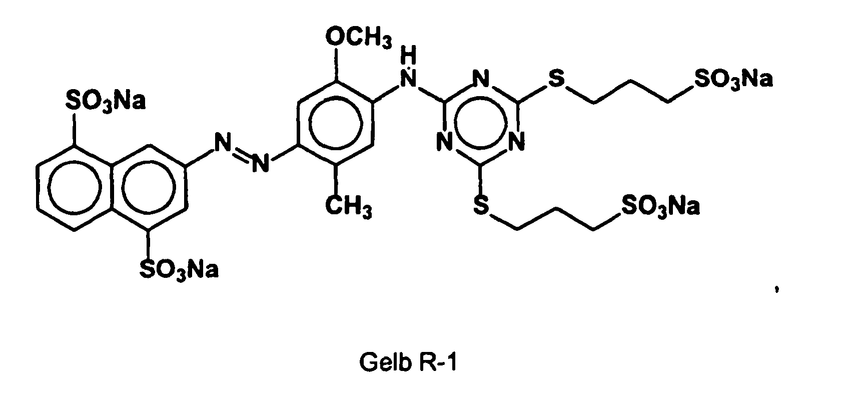 der Gelbfarbstoff "Gelb R-2" der Formel 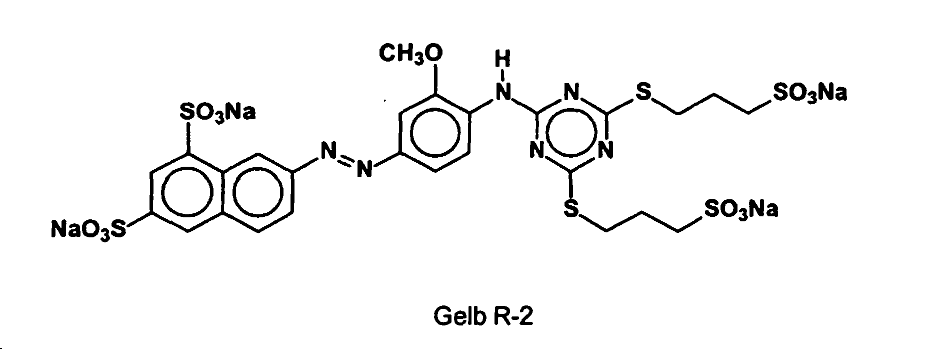 oder ein Gemisch dieser beiden Farbstoffe verwendet wird
und
als grünstichiger Gelbfarbstoff der Farbstoff "Gelb G-1" der Formel 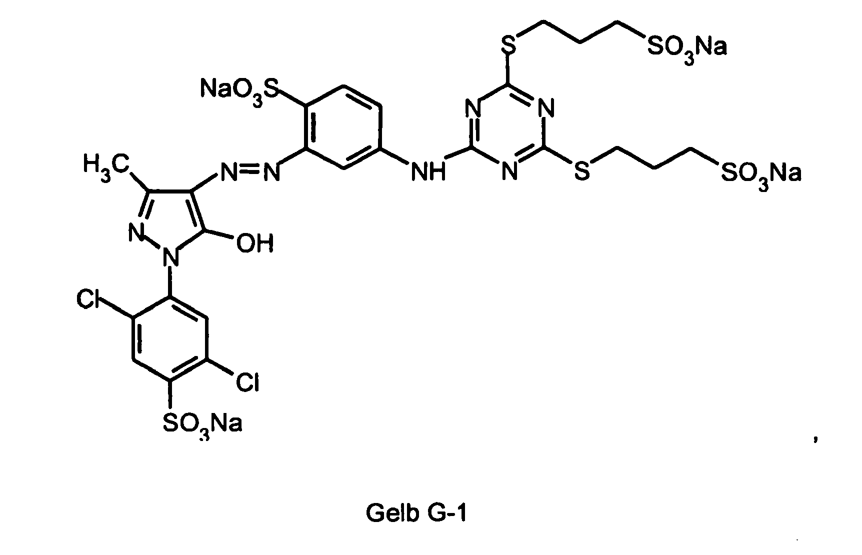 der Farbstoff "Gelb G-2" der Formel 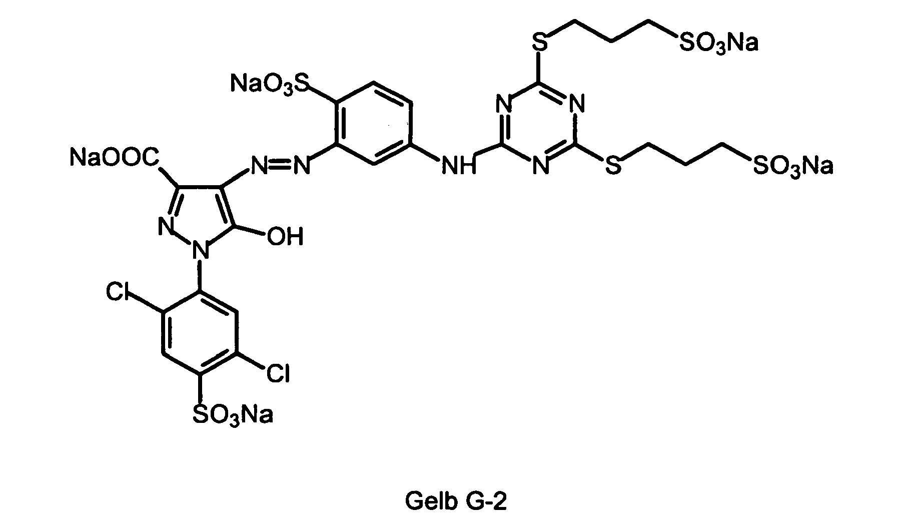 oder ein Gemisch dieser Farbstoffe verwendet wird.

4. Tintensatz nach Anspruch 1, **dadurch gekennzeichnet, dass** in der Purpurtinte der Farbstoff "Purpur 1" der Formel 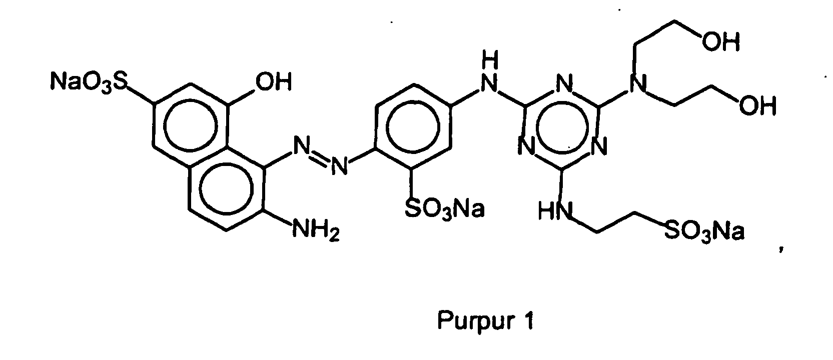 der Farbstoff "Purpur 2" der Formel 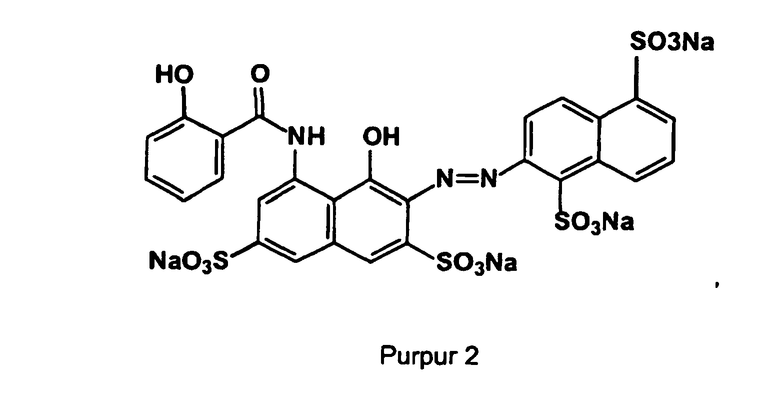 der Farbstoff "Purpur 3" der Formel 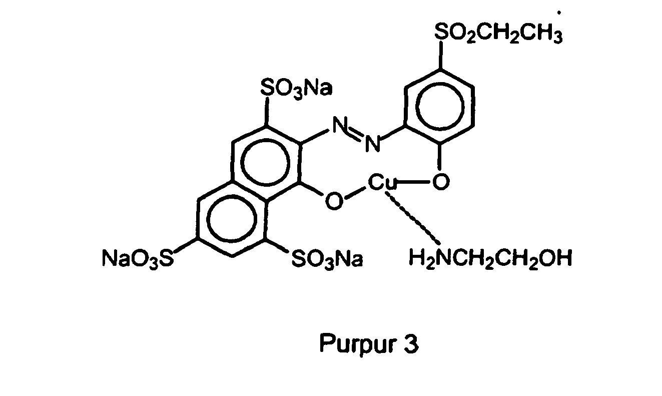 oder ein Gemisch dieser Farbstoffe verwendet wird.

5. Tintensatz gemäss Anspruch 1, **dadurch gekennzeichnet, dass** die Blaugrüntinte als Blaugrünfarbstoff mindestens einen Kupferphthalocyanin-Farbstoff enthält.

6. Tintensatz gemäss Anspruch 5, **dadurch gekennzeichnet, dass** als Blaugrünfarbstoff der Farbstoff "Direktblau 199" der Formel 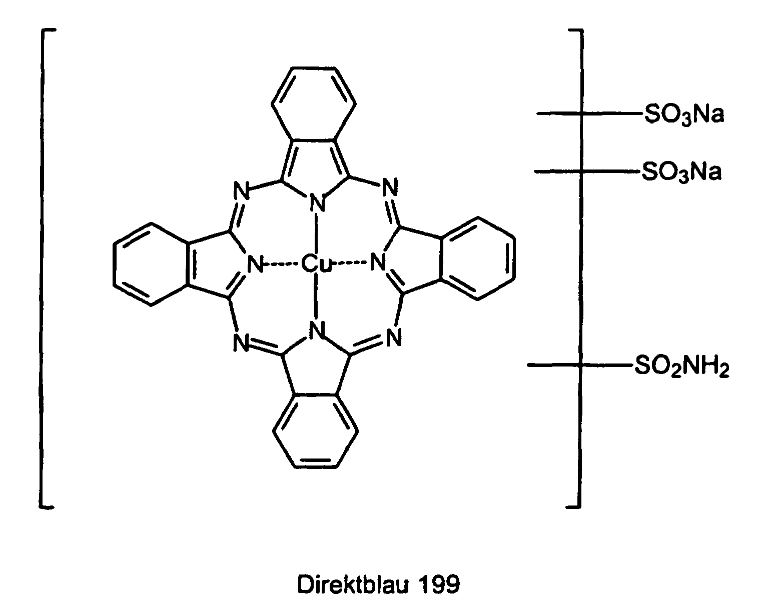 verwendet wird.

7. Tintensatz nach Anspruch 1, **dadurch gekennzeichnet, dass** in der Schwarztinte der Farbstoff "Schwarz 1" der Formel 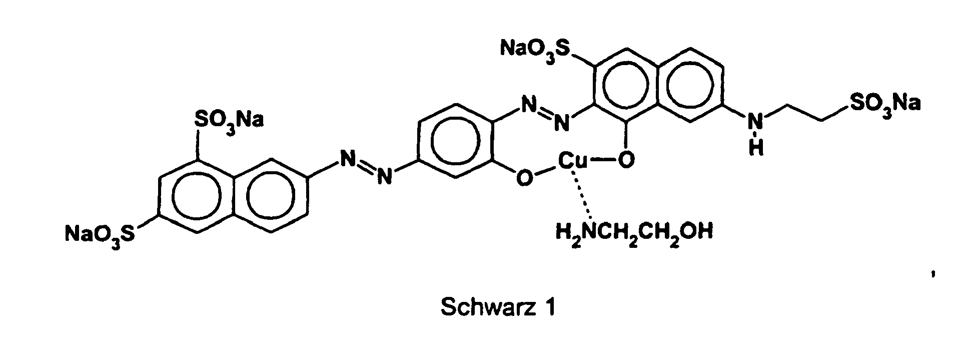 der Farbstoff "Schwarz 2" der Formel 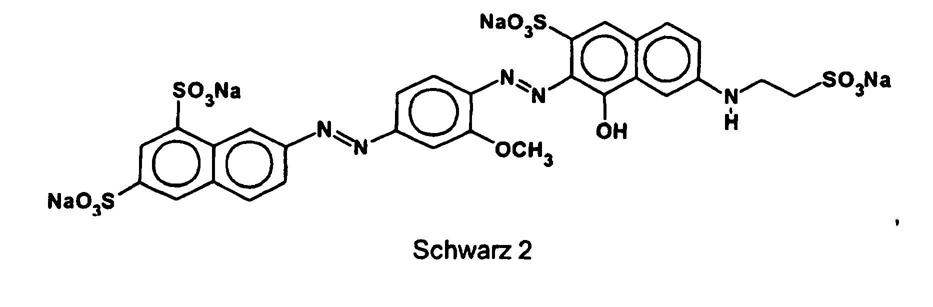 der Farbstoff "Reaktivschwarz 31" 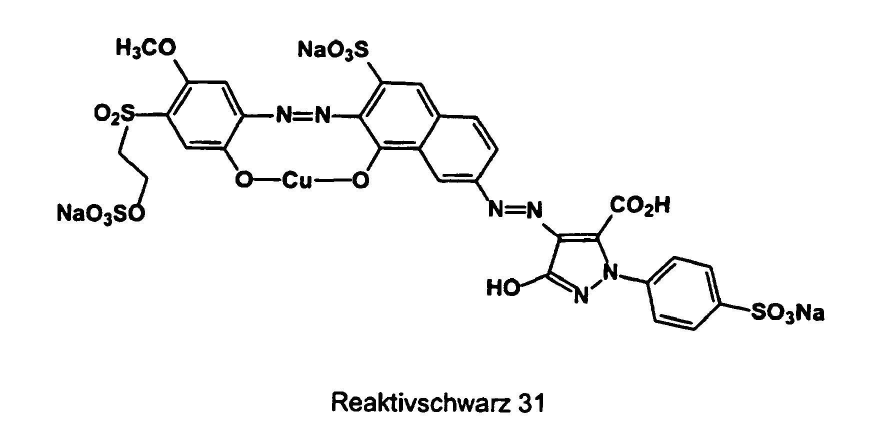 oder ein Gemisch dieser Farbstoffe verwendet wird.

8. Tintensatz nach Anspruch 1, **dadurch gekennzeichnet, dass** die Gelbtinte, die Purpurtinte, die Blaugrüntinte und die Schwarztinte die Farbstoffe insgesamt je in einer Menge zwischen 0.1 Gewichtsprozent und 10 Gewichtsprozent bezogen auf das Gesamtgewicht jeder Tinte enthalten.

9. Tintensatz nach Anspruch 1, **dadurch gekennzeichnet, dass** die Gelbtinte, die Purpurtinte, die Blaugrüntinte und die Schwarztinte die Farbstoffe insgesamt je in einer Menge zwischen 2 Gewichtsprozent und 6 Gewichtsprozent bezogen auf das Gesamtgewicht jeder Tinte enthalten.

10. Tintensatz für den Tintenstrahldruck, **dadurch gekennzeichnet, dass** der Tintensatz als Gelbtinte eine Tinte gemäss Anspruch 3, als Purpurtinte eine Tinte gemäss Anspruch 4, als Blaugrüntinte eine Tinte gemäss Anspruch 6 und als Schwarztinte eine Tinte gemäss Anspruch 7 enthält.

## Claims

1. Ink set for ink jet printing comprising at least one yellow ink, at least one magenta ink, at least one cyan ink and at lest one black ink, **characterized by** the fact that the yellow ink contains a mixture of at least one yellow dye with reddish hue of general formula (I), 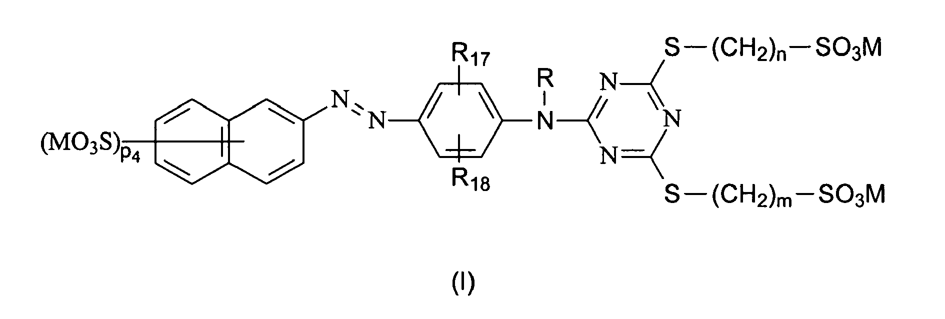 wherein
R represents hydrogen or alkyl having from 1 to 6 carbon atoms;
M represents hydrogen or a metal atom or ammonium optionally substituted by alkyl, alkoxyalkyl or hydroxyalkyl;
R₁₇, R₁₈ independently represent hydrogen, alkyl or alkoxyalkyl each having from 1 to 3 carbon atoms;
p₄ is from 1 to 3 and the sulpho group is in position 1, 4, 5, 6, 7 or 8 in the case where p₄ is equal to 1; the sulpho groups are in positions 4 and 8, 5 and 7, 6 and 8 or 1 et 5 in the case where p₄ is equal to 2; or the sulpho groups are in positions 3, 6 and 8 or 4, 6 and 8 in the case where p₄ is equal to 3
and
n, m are each independently from 2 to 6,
and
at least one yellow dye with greenish hue of general formula (II), 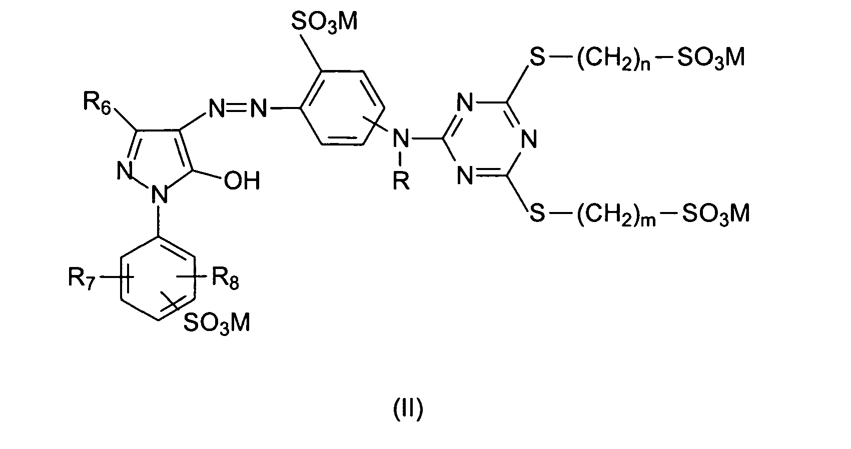 wherein
R represents hydrogen or alkyl having from 1 to 6 carbon atoms;
M represents hydrogen or a metal atom or ammonium optionally substituted by alkyl, alkoxyalkyl or hydroxyalkyl;
R₆ represents methyl or carboxy;
R₇, R₈ independently represent hydrogen, chloro, bromo or methyl;
and
n, m are each independently from 2 to 6.

2. Ink set according to claim 1, **characterized by** the fact that the ratio of the quantities of the yellow dyes with reddish hue to of the quantities of the yellow dyes with greenish hue is from 1 : 99 by weight to 99 : 1 by weight.

3. Ink set according to claims 1 and 2, **characterized by** the fact that the dye with reddish hue is "Yellow R-1" of formula 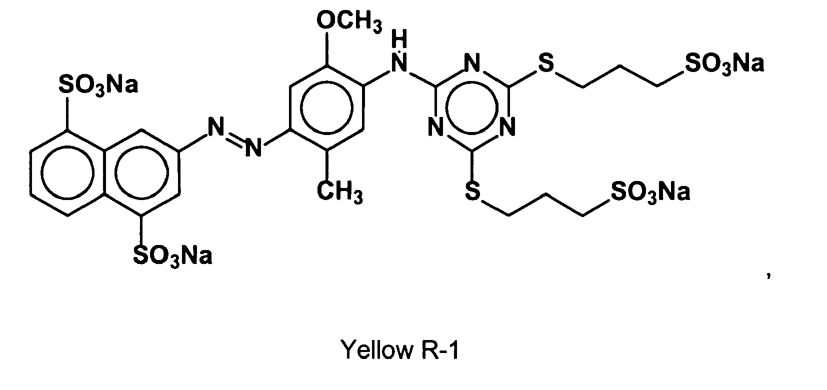 the dye "Yellow R-2" of formula 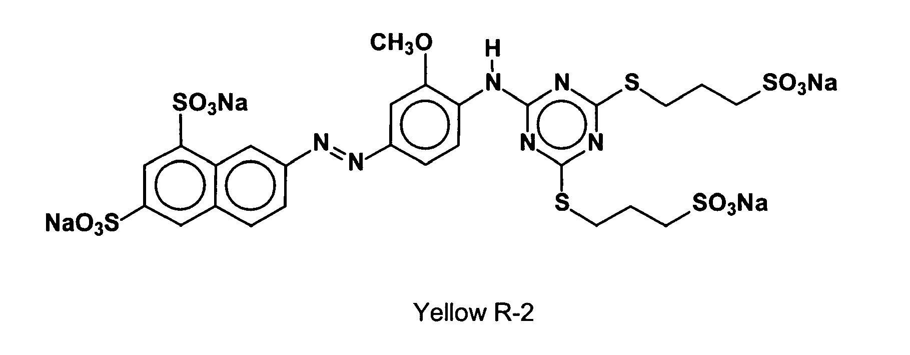 or a mixture of these two dyes
and
the dye with greenish hue is "Yellow G-1" of formula 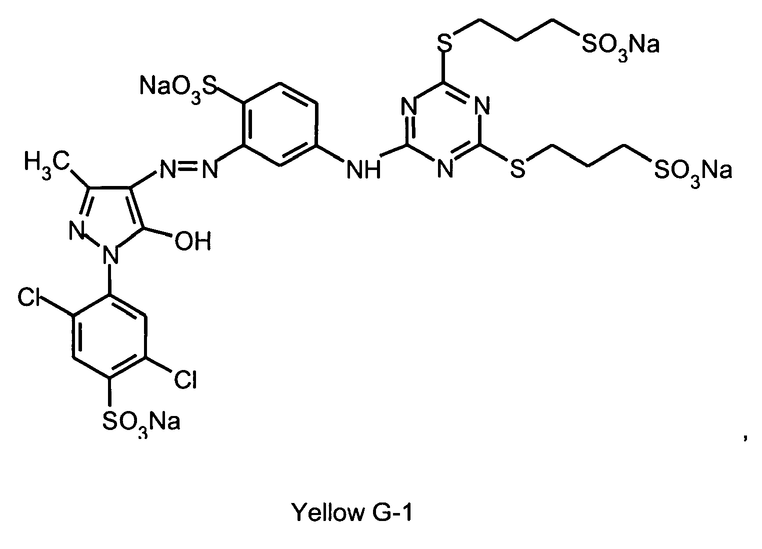 the dye "Yellow G-2" of formula 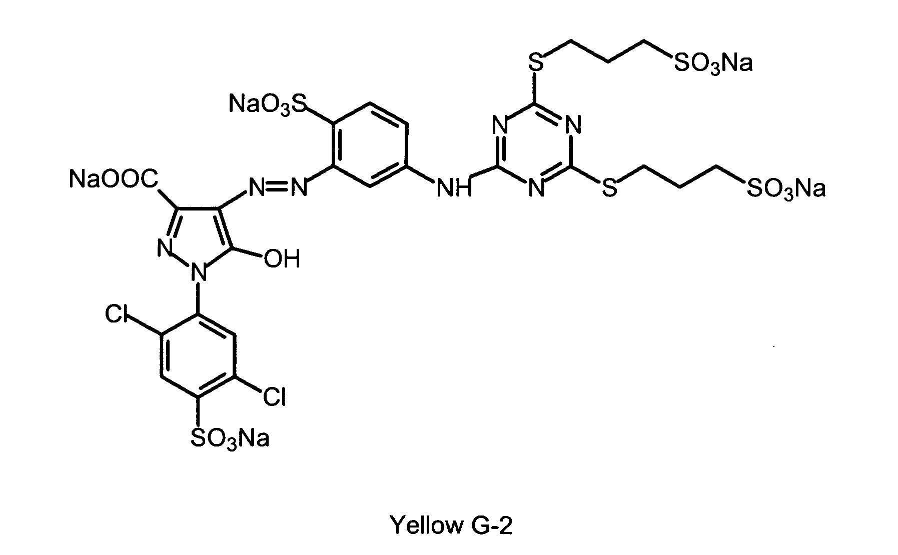 or a mixture of these two dyes.

4. Ink set according to claim 1, **characterized by** the fact that the magenta ink contains the dye "Magenta 1" of formula 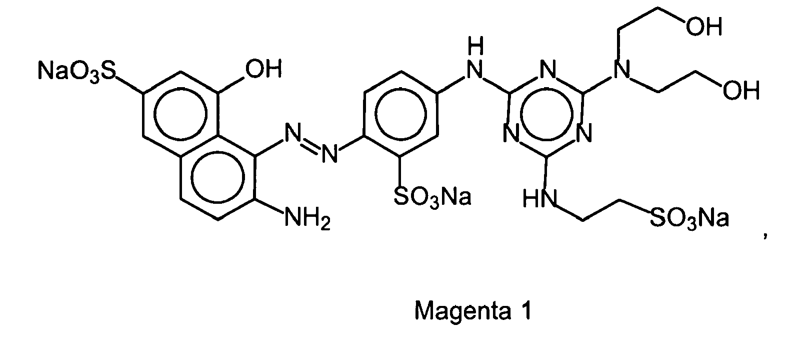 the dye "Magenta 2" of formula 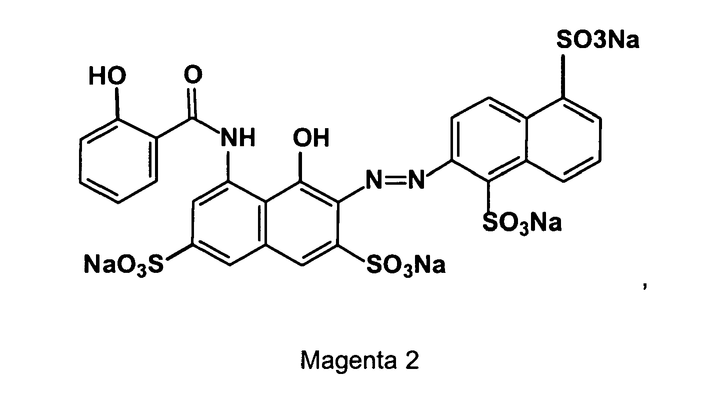 the dye "Magenta 3" of formula 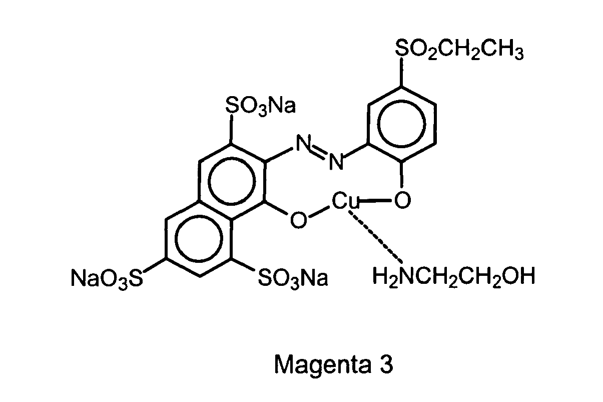 or a mixture of these dyes.

5. Ink set according to claim 1, **characterized by** the fact that the cyan ink contains at least one copper phthalocyanine dye.

6. Ink set according to claim 1, **characterized by** the fact that the cyan dye is "Direct Blue 199" of formula

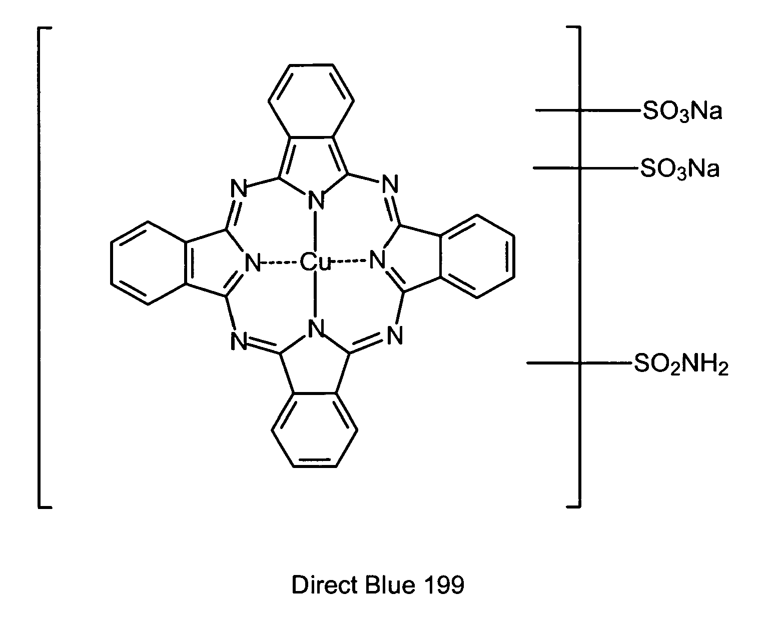

7. Ink set according to claim 1, **characterized by** the fact that the black ink contains the dye "Black 1" of formula 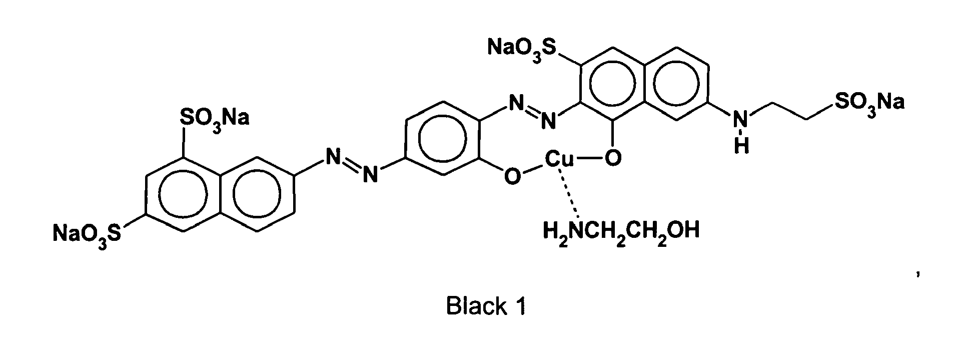 the dye "Black 2" of formula 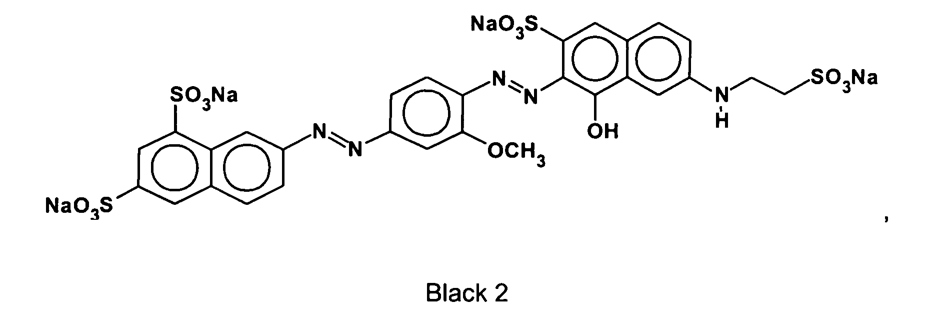 the dye "Reactive Black 31" of formula 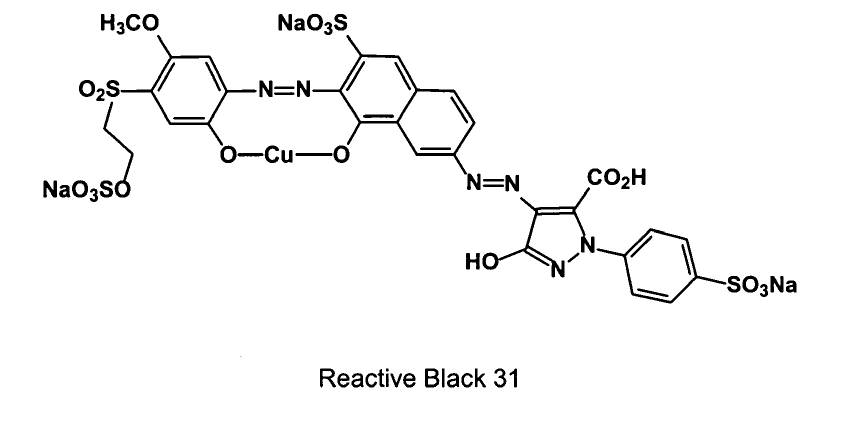 or a mixture of these dyes.

8. Ink set according to claim 1, **characterized by** the fact that the yellow ink, the magenta ink, the cyan ink and the black ink each contain the dyes in amounts of from 0.1 percent by weight to 10 percent by weight relative to the total weight of each ink.

9. Ink set according to claim 1, **characterized by** the fact that the yellow ink, the magenta ink, the cyan ink and the black ink each contain the dyes in amounts of from 2 percent by weight to 6 percent by weight relative to the total weight of each ink..

10. Ink set for ink jet printing, **characterized by** the fact that the ink set comprises a yellow ink according to claim 3, a magenta ink according to claim 4, a cyan ink according to claim 6 and a black ink according to claim 7.

## Revendications

1. Assortiment d'encres destiné à l'impression par jet d'encre, composé au moins d'une encre jaune, au moins d'une encre magenta, au moins d'une encre cyan et au moins d'une encre noire, **caractérisé par le fait que** l'encre jaune contient un mélange d'au moins un colorant rougeâtre de formule générale (I), 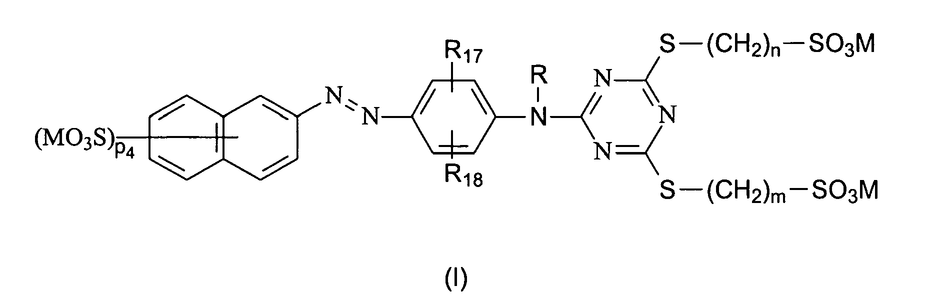 dans laquelle
R représente un atome d'hydrogène ou un radical aliphatique ayant de 1 à 6 atomes de carbone;
M représente un atome d'hydrogène ou un atome métallique ou un cation ammonium optionnellement substitué par un radical alkyle, un radical alcoxyalkyle ou un radical hydroxyalkyle;
R₁₇, R₁₈ représentent indépendamment un atome d'hydrogène, un radical alkyle ou un radical alcoxyalkyle ayant chacun de 1 à 3 atomes de carbone;
p₄ vaut de 1 à 3 et le radical sulfo est en position 1, 4, 5, 6, 7 ou 8, si p₄ vaut 1; les radicaux sulfo sont en positions 4 et 8, 5 et 7, 6 et 8 ou 1 et 5, si p₄ vaut 2; ou les radicaux sulfo sont en positions 3, 6 et 8 ou 4, 6 et 8, si p₄ vaut 3
et
n, m indépendamment l'un de l'autre valent entre 2 et 6,
et
au moins un colorant verdâtre de formule générale (II), 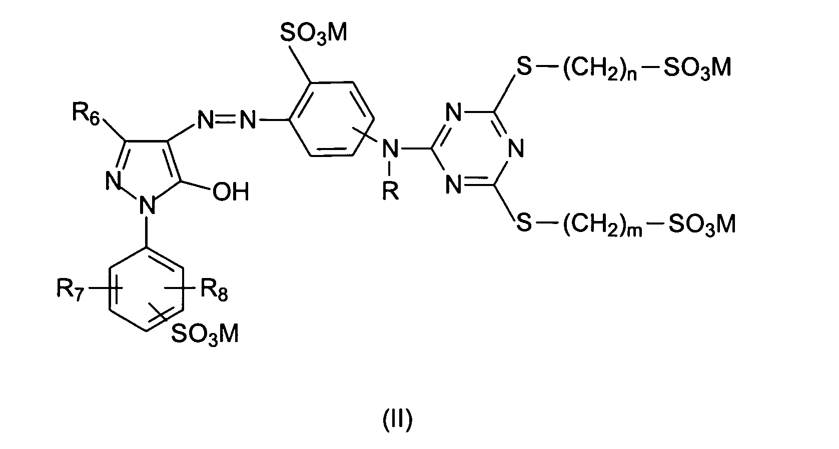 dans laquelle
R représente un atome d'hydrogène ou un radical aliphatique ayant de 1 à 6 atomes de carbone;
M représente un atome d'hydrogène ou un atome métallique ou un cation ammonium optionnellement substitué par un radical alkyle, un radical alcoxyalkyle ou un radical hydroxyalkyle;
R₆ représente un radical méthyle ou un radical carboxyle;
R₇, R₈ représentent indépendamment un atome d'hydrogène, un atome de chlore, un atome de brome ou un radical méthyle;
et
n, m indépendamment l'un de l'autre valent entre 2 et 6.

2. Assortiment d'encres selon la revendication 1, **caractérisé par le fait que** le rapport pondéral des colorants rougeâtres et des colorants verdâtres de l'encre jaune est situé entre 1 : 99 et 99 : 1.

3. Assortiment d'encres selon les revendications 1 et 2, **caractérisé par le fait que** le colorant rougeâtre est le colorant "Jaune R-1" de formule 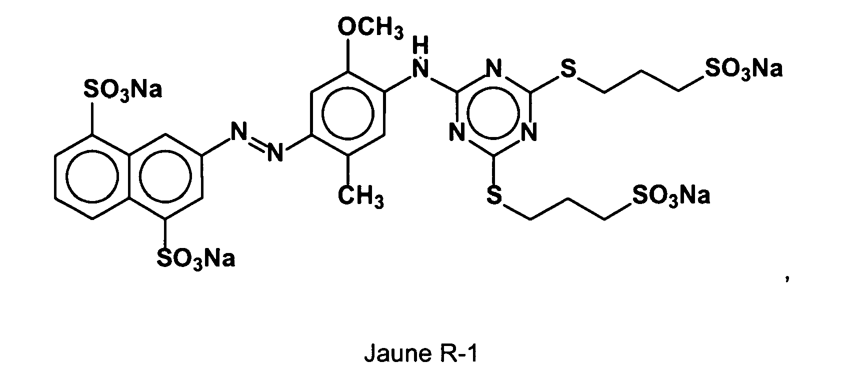 le colorant "Jaune R-2" de formule 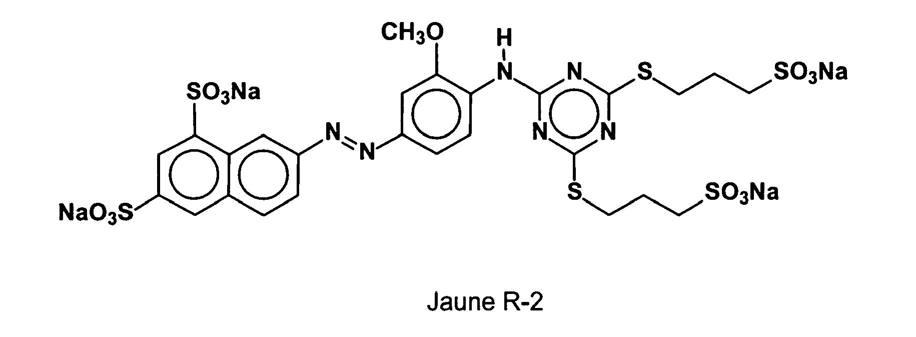 ou un mélange de ces deux colorants
et
le colorant verdâtre est le colorant "Jaune G-1" de formule 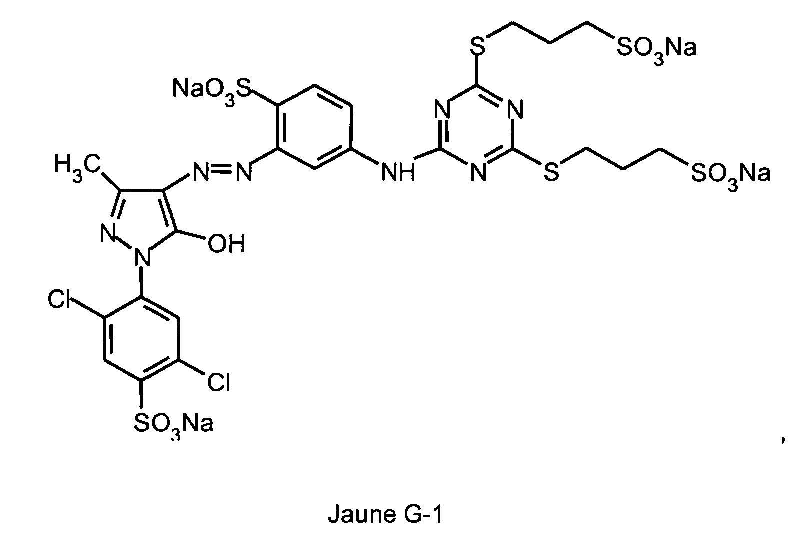 le colorant "Jaune G-2" de formule 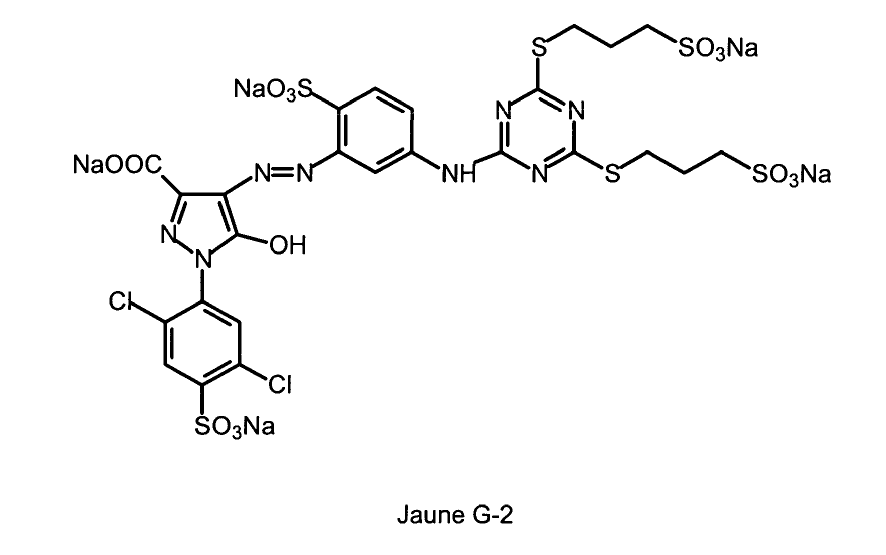 ou un mélange de ces deux colorants.

4. Assortiment d'encres selon la revendication 1, **caractérisé par le fait que** l'encre magenta contient le colorant "Magenta 1" de formule 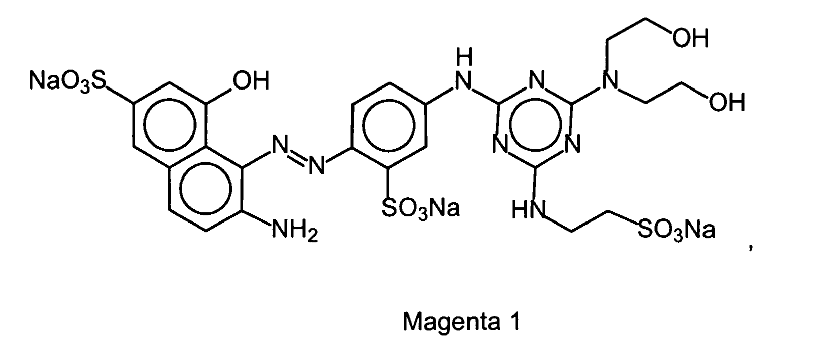 le colorant "Magenta 2" de formule 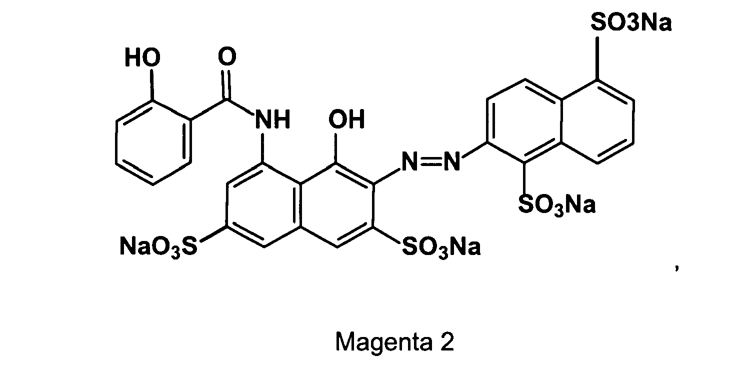 le colorant "Magenta 3" de formule 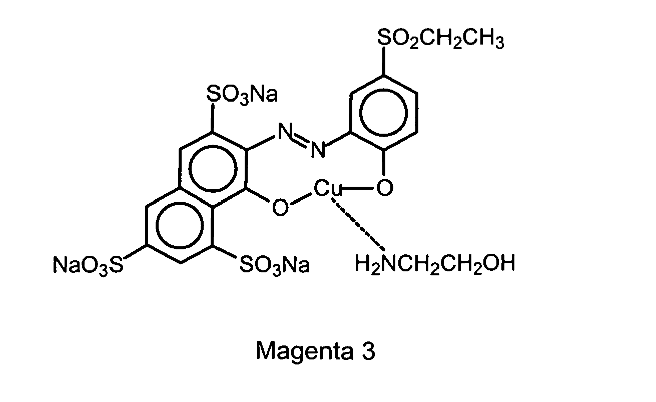 ou un mélange de ces colorants.

5. Assortiment d'encres selon la revendication 1, **caractérisé par le fait que** l'encre cyan contient au moins un colorant phthalocyanine de cuivre.

6. Assortiment d'encres selon la revendication 1, **caractérisé par le fait que** un colorant cyan est le colorant "Bleu direct 199" de formule

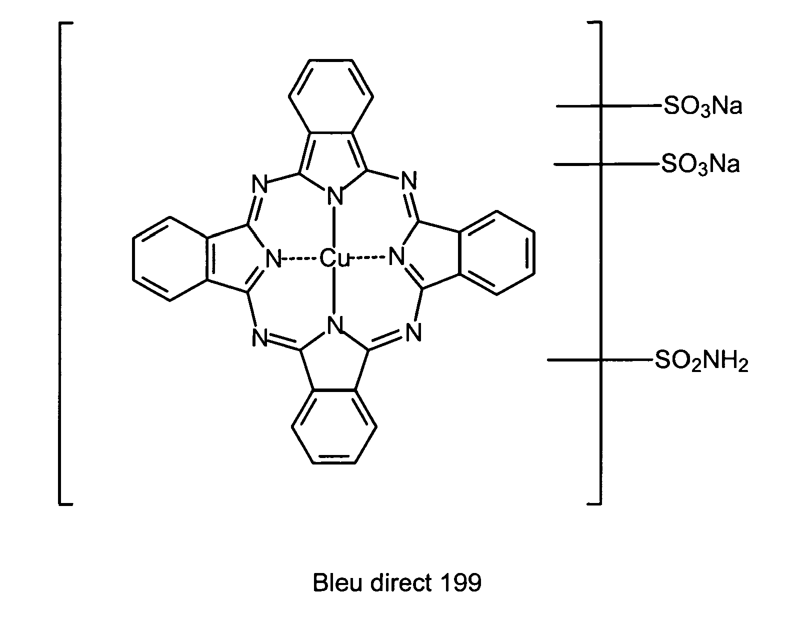

7. Assortiment d'encres selon la revendication 1, **caractérisé par le fait que** l'encre noire contient le colorant "Noir 1" de formule 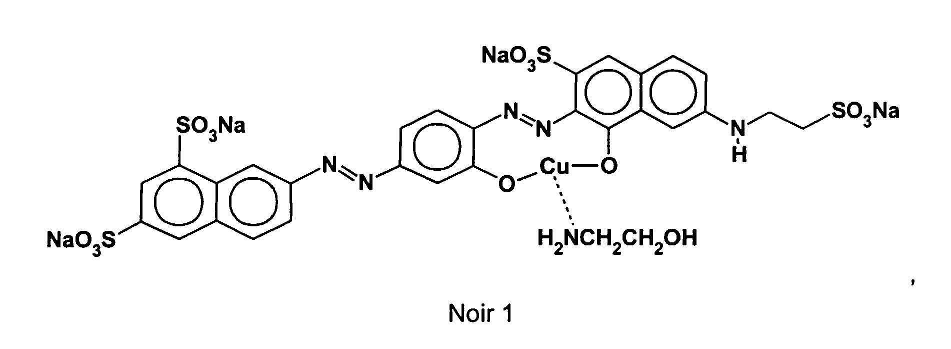 le colorant noir "Noir 2" de formule 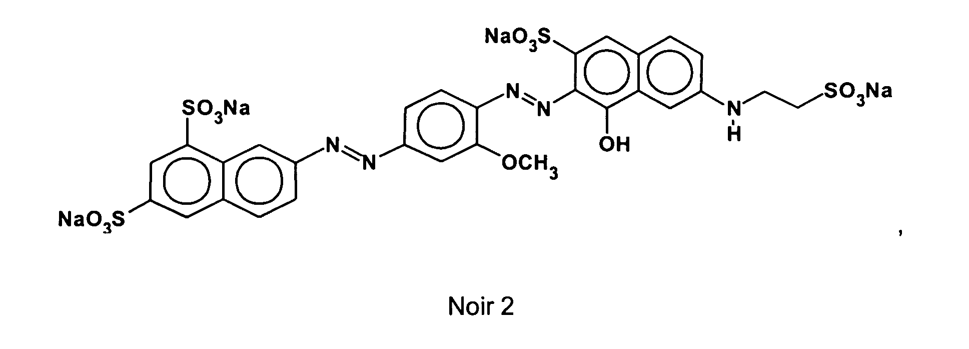 le colorant "Noir réactif 31" 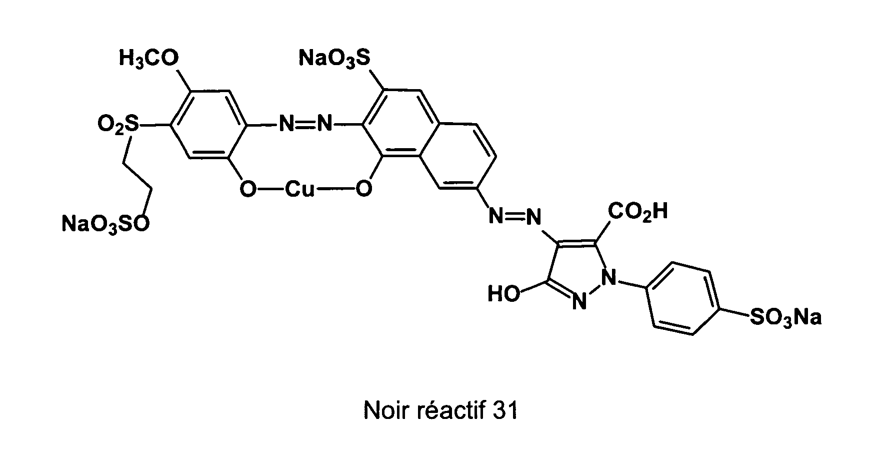 ou un mélange de ces colorants.

8. Assortiment d'encres selon la revendication 1, **caractérisé par le fait que** l'encre jaune, l'encre magenta, l'encre cyan et l'encre noire contiennent une quantité de colorants située entre 0.1 pour-cent pondéral et 10 pour-cent pondéral par rapport à la masse totale de chaque encre.

9. Assortiment d'encres selon la revendication 1, **caractérisé par le fait que** l'encre jaune, l'encre magenta, l'encre cyan et l'encre noire contiennent une quantité de colorants située entre 2 pour-cent pondéral et 6 pour-cent pondéral par rapport à la masse totale de chaque encre.

10. Assortiment d'encres destiné à l'impression par jet d'encre, **caractérisé par le fait que** l'assortiment d'encres contient comme encre jaune une encre selon la revendication 3, comme encre magenta une encre selon la revendication 4, comme encre cyan une encre selon la revendication 6 et comme encre noire une encre selon la revendication 7.
